(19) **Europäisches Patentamt**
**European Patent Office**
**Office européen des brevets**

(11) **EP 4 535 918 A1**

(12) **EUROPEAN PATENT APPLICATION**
published in accordance with Art. 153(4) EPC

(43) Date of publication:
09.04.2025 Bulletin 2025/15

(21) Application number: 23816307.5

(22) Date of filing: 26.05.2023

(51) International Patent Classification (IPC):
*H04W 76/15* (2018.01)  *H04W 24/10* (2009.01)
*H04W 84/12* (2009.01)  *H04B 7/024* (2017.01)
*H04L 1/18* (2023.01)  *H04W 52/24* (2009.01)

(52) Cooperative Patent Classification (CPC):
H04B 7/024; H04L 1/18; H04W 24/10; H04W 52/24;
H04W 76/15; H04W 84/12

(86) International application number:
PCT/KR2023/007237

(87) International publication number:
WO 2023/234646 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 03.06.2022 KR 20220068367

(71) Applicant: LG Electronics Inc.
Yeongdeungpo-gu
Seoul 07336 (KR)

(72) Inventors:
• CHUN, Jinyoung
  Seoul 06772 (KR)
• CHOI, Jinsoo
  Seoul 06772 (KR)
• LIM, Dongguk
  Seoul 06772 (KR)
• PARK, Eunsung
  Seoul 06772 (KR)

(74) Representative: Plasseraud IP
104 Rue de Richelieu
CS92104
75080 Paris Cedex 02 (FR)

(54) **METHOD AND DEVICE FOR SIGNALING BASED ON MULTI-ACCESS POINT OPERATION IN WIRELESS LAN SYSTEM**

(57) Disclosed are an operation method and device in a wireless LAN system. A method performed in a wireless LAN system by a first STA according to an embodiment disclosed herein comprises the steps of: receiving a first downlink (DL) frame from a first access point (AP); and transmitting a first uplink (UL) frame for the first DL frame within a specific duration or after the specific duration, wherein the specific duration may include a duration in which a second DL frame is transmitted from a second AP to a second STA, the first AP may be an overlapping basic service set (OBSS), and the second AP may be a BSS AP.

FIG.17

RECEIVING A FIRST DL FRAME FROM THE FIRST ACCESS POINT — S1710

TRANSMITTING AN UL FRAME FOR THE FIRST DL FRAME TO THE FIRST AP WITHIN A SPECIFIC DURATION OR AFTER A SPECIFIC DURATION — S1720

**Description**

[TECHNICAL FIELD]

The present disclosure relates to a communication operation in a Wireless Local Area Network (WLAN) system, and more specifically, to a signaling method and device based on multiple access point operation in a WLAN system.

[BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

[Disclosure]

[Technical Problem]

The technical problem of the present disclosure is to provide a signaling method and device based on multiple access point operation in a wireless LAN system.

The technical problem of the present disclosure is to provide a method and device for transmitting data using the C-SR (coordinated spatial reuse) technique in a wireless LAN system.

The technical problem of the present disclosure is to provide a method and device for transmitting UL ACK according to DL PPDU transmission of an OBSS AP when performing multiple access point operation in a wireless LAN system.

The technical objects to be achieved by the present disclosure are not limited to the above-described technical objects, and other technical objects which are not described herein will be clearly understood by those skilled in the pertinent art from the following description.

[Technical Solution]

According to one aspect of the present disclosure, a method for performing communication by a first station (STA) in a wireless LAN system may include receiving a first downlink (DL) frame from a first access point (AP); and transmitting a first uplink (UL) frame for the first DL frame to the first AP within a specific duration or after the specific duration, and the specific duration may include a duration in which a second DL frame is transmitted from a second AP to a second STA, and the first AP may be an OBSS (overlapping basic service set) AP, and the second AP may be a BSS AP.

According to additional aspect of the present disclosure, a method performed by a first access point (AP) in a wireless LAN system may include transmitting a first downlink (DL) frame to a first station (STA); and receiving a first uplink (UL) frame for the first DL frame from the first STA within a specific duration or after the specific duration, and the specific duration may include a duration in which a second DL frame is transmitted from a second AP to a second STA, and the first AP may be an OBSS (overlapping basic service set) AP, and the second AP may be a BSS AP.

[Technical Effects]

According to various embodiments of the present disclosure, a method and device for multi-access point operation-based signaling in a wireless LAN system may be provided.

According to various embodiments of the present disclosure, a method and device for transmitting data using a C-SR technique in a wireless LAN system may be provided.

According to various embodiments of the present disclosure, a method and device for transmitting UL ACK according to DL PPDU transmission of an OBSS AP when performing multi-access point operation in a wireless LAN system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIGS. 8 to 10 are diagrams for explaining examples of resource units of a wireless LAN system to which the present disclosure may be applied.
FIG. 11 is a diagram for explaining examples of DRUs to which the present disclosure may be applied.
FIG. 12 is a diagram showing an exemplary format of a trigger frame to which the present disclosure may be applied.
FIG. 13 illustrates an A-PPDU structure to which the present disclosure may be applied.
FIG. 14 illustrates an exemplary format of a trigger frame to which the present disclosure may be applied.
FIG. 15 is a diagram for describing various transmission and reception techniques in a MAP environment to which the present disclosure may be applied.
FIG. 16 is a diagram for describing a process of obtaining channel state information between BSS/OBSS AP/STA according to an embodiment of the present disclosure.
FIG. 17 is a diagram for describing an operation performed by a first STA according to an embodiment of the present disclosure.
FIG. 18 is a diagram for describing an operation performed by a first AP according to an embodiment of the present disclosure.
FIG. 19 is a diagram for describing a process of transmitting UL ACK according to DL PPDU transmission of an OBSS AP according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

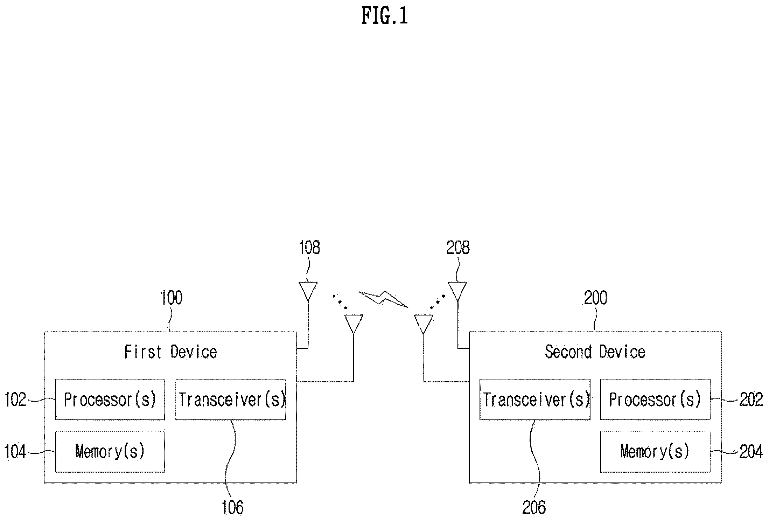

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomousdriving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/-signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/-

circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs (Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF, Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/ encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

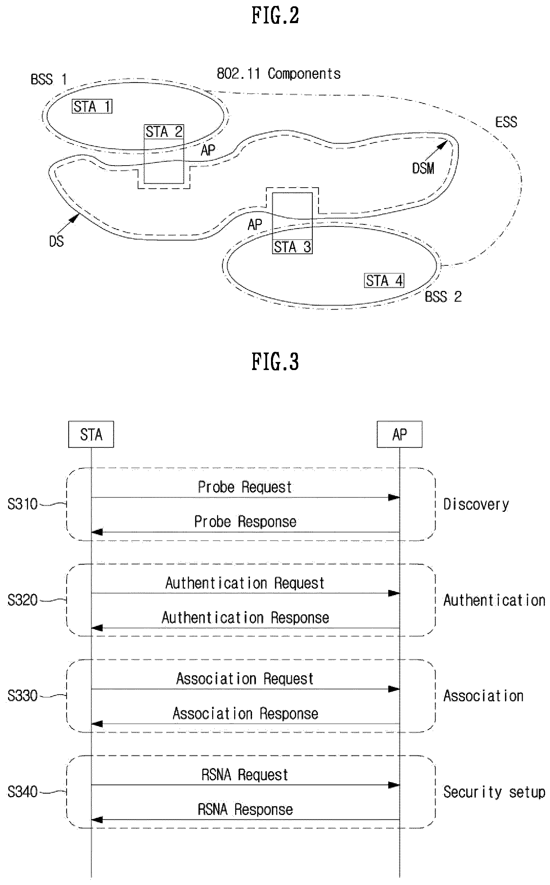

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

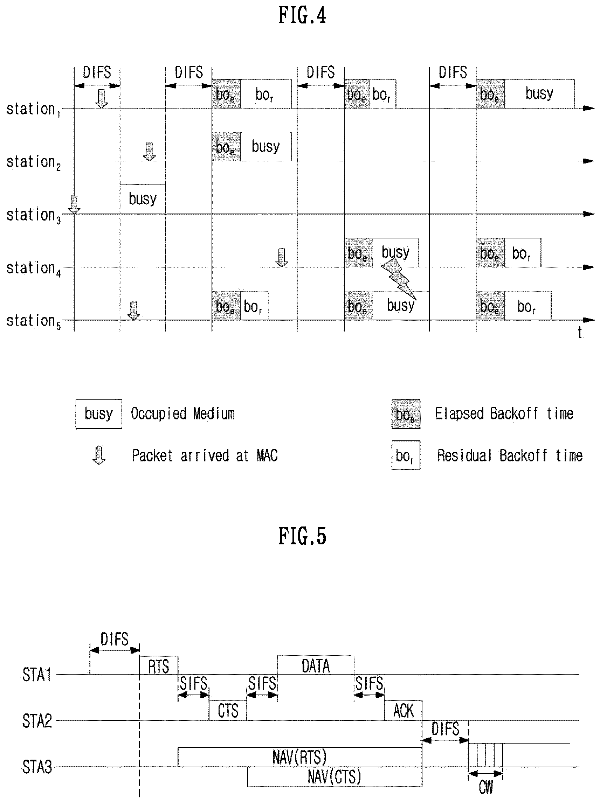

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to $2^n-1$ (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

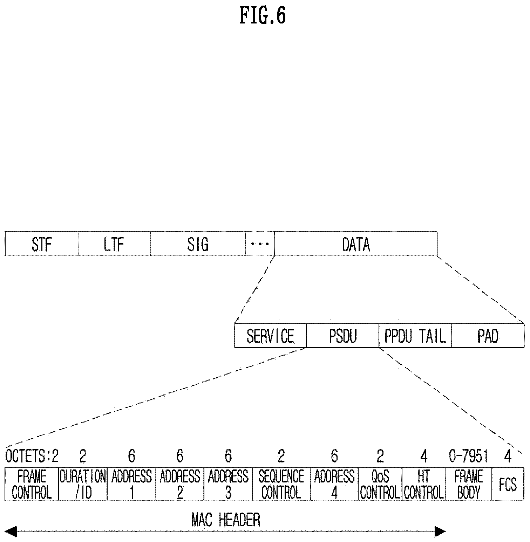

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

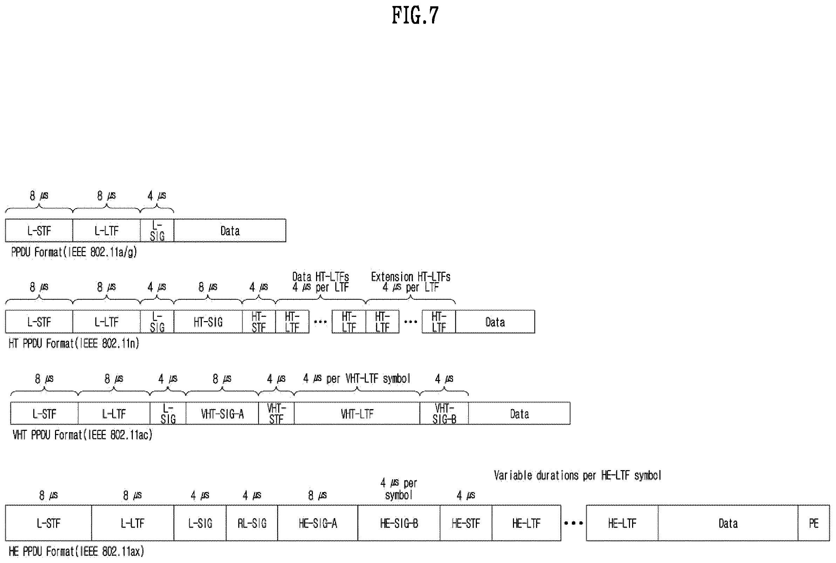

A basic PPDU frame may include a Short Training Field (STF), a Long Training Field (LTF), a SIGNAL (SIG) field, and a Data field. The most basic (e.g., non-High Throughput (HT)) PPDU frame format may consist of only L-STF (Legacy-STF), L-LTF (Legacy-LTF), SIG field, and data field. In addition, depending on the type of PPDU frame format (e.g., HT-mixed format PPDU, HT-greenfield format PPDU, VHT (Very High Throughput) PPDU, etc.), an additional (or different type) STF, LTF, and SIG fields may be included between the SIG field and the data field (this will be described later with reference to FIG. 7).

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include a RATE field and a LENGTH field. The RATE field may include information on modulation and coding rates of data. The LENGTH field may include information on the length of data. Additionally, the SIG field may include a parity bit, a SIG TAIL bit, and the like.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

A null-data packet (NDP) frame format means a frame format that does not include a data packet. That is, the NDP frame refers to a frame format that includes a physical layer convergence procedure (PLCP) header part (i.e., STF, LTF, and SIG fields) in a general PPDU frame format and does not include the remaining parts (i.e., data field). A NDP frame may also be referred to as a short frame format.

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format.

The HT PPDU format (IEEE 802.11n) additionally includes HT-SIG, HT-STF, and HT-LFT(s) fields to the basic PPDU format. The HT PPDU format shown in FIG. 7 may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format.

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format. Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us.

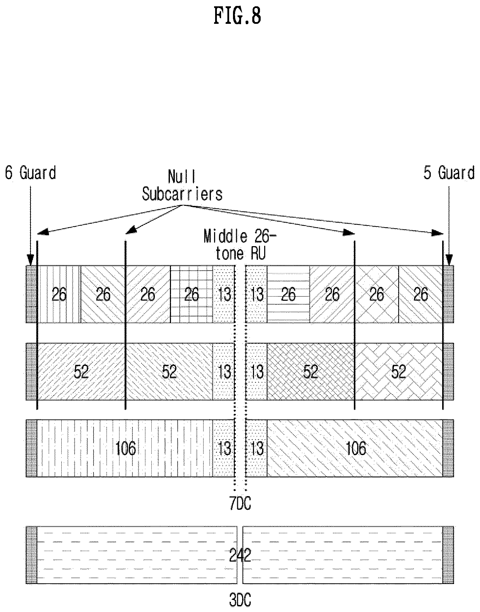

FIGs. 8 to 10 are diagrams for explaining examples of resource units of a WLAN system to which the present disclosure may be applied.

Referring to FIGS. 8 to 10, a resource unit (RU) defined in a wireless LAN system will be described. the RU may include a plurality of subcarriers (or tones). The RU may be used when transmitting signals to multiple STAs based on the OFDMA scheme. In addition, the RU may be defined even when a signal is transmitted to one STA. The RU may be used for STF, LTF, data field of the PPDU, etc.

As shown in FIGS. 8 to 10, RUs corresponding to different numbers of tones (i.e., subcarriers) are used to construct some fields of 20 MHz, 40 MHz, or 80 MHz X-PPDUs (X is HE, EHT, etc.). For example, resources may be allocated in RU units shown for the X-STF, X-LTF, and Data field.

FIG. 8 is a diagram illustrating an exemplary allocation of resource units (RUs) used on a 20 MHz band.

As shown at the top of FIG. 8, 26-units (i.e., units corresponding to 26 tones) may be allocated. 6 tones may be used as a guard band in the leftmost band of the 20 MHz band, and 5 tones may be used as a guard band in the rightmost band of the 20 MHz band. In addition, 7 DC tones are inserted in the center band, that is, the DC band, and 26-units corresponding to each of the 13 tones may exist on the left and right sides of the DC band. In addition, 26-unit, 52-unit, and 106-unit may be allocated to other bands. Each unit may be allocated for STAs or users.

The RU allocation of FIG. 8 is utilized not only in a situation for multiple users (MU) but also in a situation for a single user (SU), and in this case, it is possible to use one 242-unit as shown at the bottom of FIG. 8. In this case, three DC tones may be inserted.

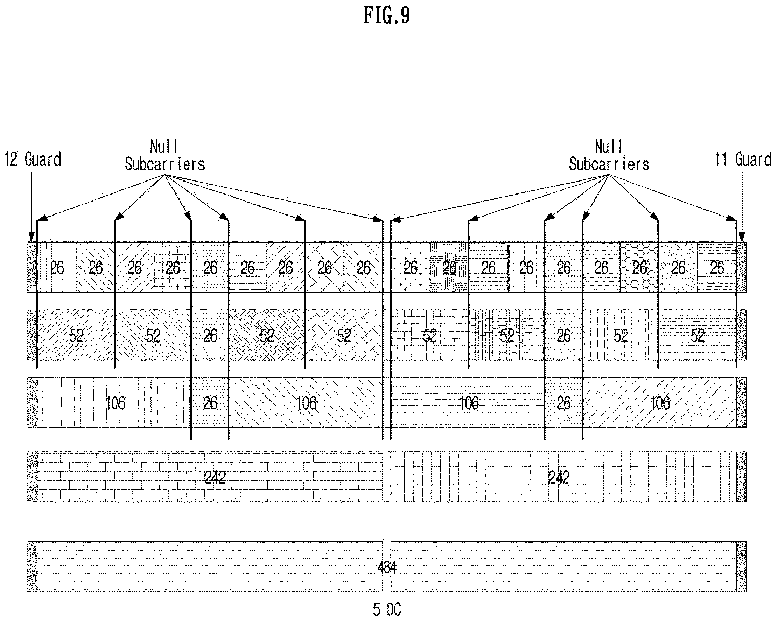

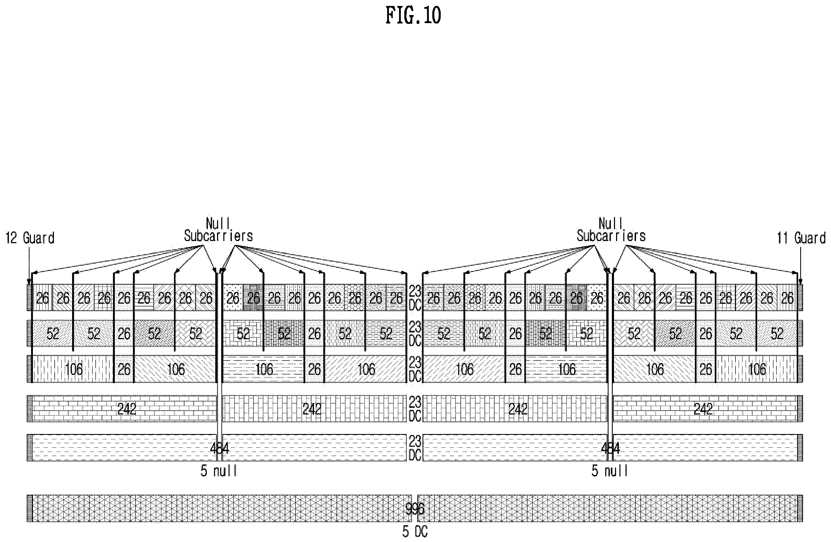

In the example of FIG. 8, RUs of various sizes, that is, 26-RU, 52-RU, 106-RU, 242-RU, etc. are exemplified, but the specific size of these RUs may be reduced or expanded. Therefore, in the present disclosure, the specific size of each RU (i.e., the number of corresponding tones) is exemplary and not restrictive. In addition, within a predetermined bandwidth (e.g., 20, 40, 80, 160, 320 MHz, ...) in the present disclosure, the number of RUs may vary according to the size of the RU. In the examples of FIG. 9 and/or FIG. 10 to be described below, the fact that the size and/or number of RUs may be varied is the same as the example of FIG. 8 .

FIG. 9 is a diagram illustrating an exemplary allocation of resource units (RUs) used on a 40 MHz band.

Just as RUs of various sizes are used in the example of FIG. 8, 26-RU, 52-RU, 106-RU, 242-RU, 484-RU, and the like may be used in the example of FIG. 9 as well. In addition, 5 DC tones may be inserted at the center frequency, 12 tones may be used as a guard band in the leftmost band of the 40MHz band, and 11 tones may be used as a guard band in the rightmost band of the 40MHz band.

In addition, as shown, when used for a single user, a 484-RU may be used.

FIG. 10 is a diagram illustrating an exemplary allocation of resource units (RUs) used on an 80 MHz band.

Just as RUs of various sizes are used in the example of FIG. 8 and FIG. 9, 26-RU, 52-RU, 106-RU, 242-RU, 484-RU, 996-RU and the like may be used in the example of FIG. 10 as well. In addition, in the case of an 80 MHz PPDU, RU allocation of HE PPDUs and EHT PPDUs may be different, and the example of FIG. 10 shows an example of RU allocation for 80 MHz EHT PPDUs. The scheme that 12 tones are used as a guard band in the leftmost band of the 80 MHz band and 11 tones are used as a guard band in the rightmost band of the 80 MHz band in the example of FIG. 10 is the same in HE PPDU and EHT PPDU. Unlike HE PPDU, where 7 DC tones are inserted in the DC band and there is one 26-RU corresponding to each of the 13 tones on the left and right sides of the DC band, in the EHT PPDU, 23 DC tones are inserted into the DC band, and one 26-RU exists on the left and right sides of the DC band. Unlike the HE PPDU, where one null subcarrier exists between 242-RUs rather than the center band, there are five null subcarriers in the EHT PPDU. In the HE PPDU, one 484-RU does not include null subcarriers, but in the EHT PPDU, one 484-RU includes 5 null subcarriers.

In addition, as shown, when used for a single user, 996-RU may be used, and in this case, 5 DC tones are inserted in common with HE PPDU and EHT PPDU.

EHT PPDUs over 160 MHz may be configured with a plurality of 80 MHz subblocks in FIG. 10. The RU allocation for each 80 MHz subblock may be the same as that of the 80 MHz EHT PPDU of FIG. 10. If the 80 MHz subblock of the 160 MHz or 320 MHz EHT PPDU is not punctured and the entire 80 MHz subblock is used as part of RU or multiple RU (MRU), the 80 MHz subblock may use 996-RU of FIG. 10.

Here, the MRU corresponds to a group of subcarriers (or tones) composed of a plurality of RUs, and the plurality of RUs constituting the MRU may be RUs having the same size or RUs having different sizes. For example, a single MRU may be defined as 52+26-tone, 106+26-tone, 484+242-tone, 996+484-tone, 996+484+242-tone, 2X996+484-tone, 3X996-tone, or 3X996+484-tone. Here, the plurality of RUs constituting one MRU may correspond to small size (e.g., 26, 52, or 106) RUs or large size (e.g., 242, 484, or 996) RUs. That is, one MRU including a small size RU and a large size RU may not be configured/defined. In addition, a plurality of RUs constituting one MRU may or may not be consecutive in the frequency domain.

When an 80 MHz subblock includes RUs smaller than 996 tones, or parts of the 80 MHz subblock are punctured, the 80 MHz subblock may use RU allocation other than the 996-tone RU.

The RU of the present disclosure may be used for uplink (UL) and/or downlink (DL) communication. For example, when trigger-based UL-MU communication is performed, the STA transmitting the trigger (e.g., AP) may allocate a first RU (e.g., 26/52/106/242-RU, etc.) to a first STA and allocate a second RU (e.g., 26/52/106/242-RU, etc.) to a second STA, through trigger information (e.g., trigger frame or triggered response scheduling (TRS)). Thereafter, the first STA may transmit a first trigger-based (TB) PPDU based on the first RU, and the second STA may transmit a second TB PPDU based on the second RU. The first/second TB PPDUs may be transmitted to the AP in the same time duration.

For example, when a DL MU PPDU is configured, the STA transmitting the DL MU PPDU (e.g., AP) may allocate a first RU (e.g., 26/52/106/242-RU, etc.) to a first STA and allocate a second RU (e.g., 26/52/106/242-RU, etc.) to a second STA. That is, the transmitting STA (e.g., AP) may transmit the HE-STF, HE-LTF, and Data fields for the first STA through the first RU within one MU PPDU, and may transmit the HE-STF, HE-LTF, and Data fields for the second STA through the second RU.

Information on the allocation of RUs may be signaled through HE-SIG-B in the HE PPDU format.

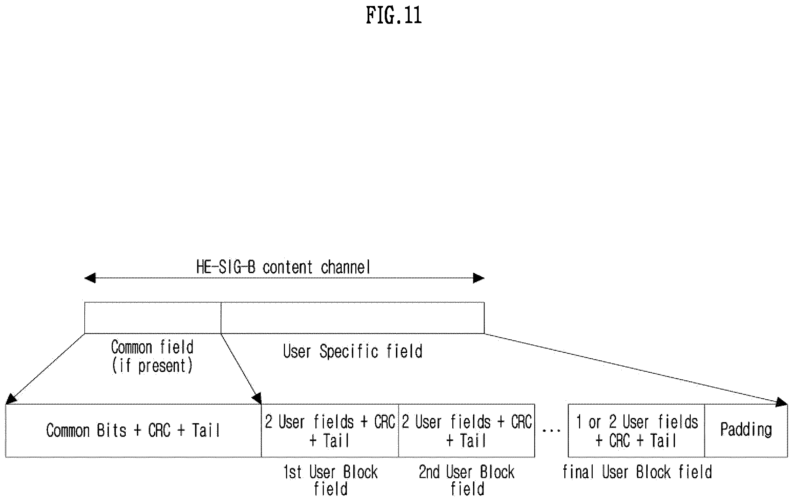

FIG. 11 illustrates an example structure of a HE-SIG-B field.

As shown, the HE-SIG-B field may include a common field and a user-specific field. If HE-SIG-B compression is applied (e.g., full-bandwidth MU-MIMO transmission), the common field may not be included in HE-SIG-B, and the HE-SIG-B content channel may include only a user-specific field. If HE-SIG-B compression is not applied, the common field may be included in HE-SIG-B.

The common field may include information on RU allocation (e.g., RU assignment, RUs allocated for MU-MIMO, the number of MU-MIMO users (STAs), etc.)

The common field may include N*8 RU allocation subfields. Here, N is the number of subfields, N = 1 in the case of 20 or 40 MHz MU PPDU, N = 2 in the case of 80 MHz MU PPDU, N = 4 in the case of 160 MHz or 80 + 80 MHz MU PPDU, etc. One 8-bit RU allocation subfield may indicate the size (26, 52, 106, etc.) and frequency location (or RU index) of RUs included in the 20 MHz band.

For example, if a value of the 8-bit RU allocation subfield is 00000000, it may indicate that nine 26-RUs are sequentially allocated in order from the leftmost to the rightmost in the example of FIG. 8, if the value is 00000001, it may indicate that seven 26-RUs and one 52-RU are sequentially allocated in order from leftmost to rightest, and if the value is 00000010, it may indicate that five 26-RUs, one 52-RU, and two 26-RUs are sequentially allocated from the leftmost side to the rightmost side.

As an additional example, if the value of the 8-bit RU allocation subfield is 01000y2y1y0, it may indicate that one 106-RU and five 26-RUs are sequentially allocated from the leftmost to the rightmost in the example of FIG. 8. In this case, multiple users/STAs may be allocated to the 106-RU in the MU-MIMO scheme. Specifically, up to 8 users/STAs may be allocated to the 106-RU, and the number of users/STAs allocated to the 106-RU is determined based on 3-bit information (i.e., y2y1y0). For example, when the 3-bit information (y2y1y0) corresponds to a decimal value N, the number of users/STAs allocated to the 106-RU may be N+1.

Basically, one user/STA may be allocated to each of a plurality of RUs, and different users/STAs may be allocated to different RUs. For RUs larger than a predetermined size (e.g., 106, 242, 484, 996-tones, ...), a plurality of users/STAs may be allocated to one RU, and MU-MIMO scheme may be applied for the plurality of users/STAs.

The set of user-specific fields includes information on how all users (STAs) of the corresponding PPDU decode their payloads. User-specific fields may contain zero or more user block fields. The non-final user block field includes two user fields (i.e., information to be used for decoding in two STAs). The final user block field contains one or two user fields. The number of user fields may be indicated by the RU allocation subfield of HE-SIG-B, the number of symbols of HE-SIG-B, or the MU-MIMO user field of HE-SIG-A. A User-specific field may be encoded separately from or independently of a common field.

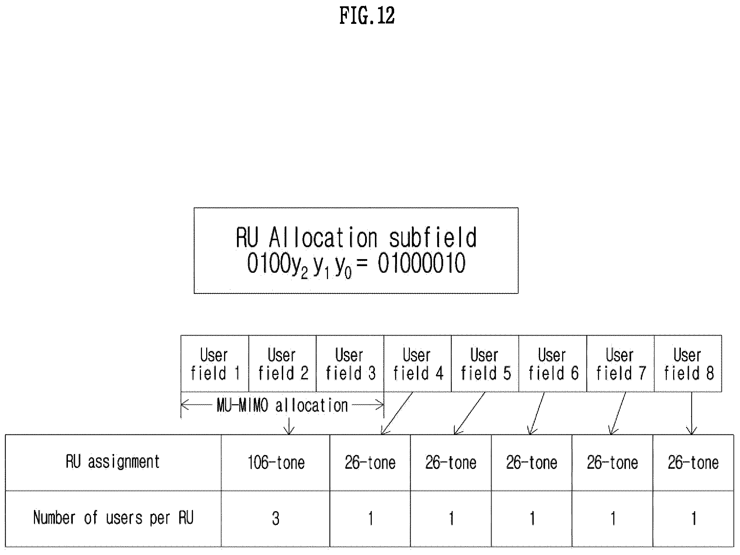

FIG. 12 is a diagram for explaining a MU-MIMO method in which a plurality of users/STAs are allocated to one RU.

In the example of FIG. 12, it is assumed that the value of the RU allocation subfield is 01000010. This corresponds to the case where y2y1y0 = 010 in 01000y2y1y0. 010 corresponds to 2 in decimal (i.e., N=2) and may indicate that 3 (=N+1) users are allocated to one RU. In this case, one 106-RU and five 26-RUs may be sequentially allocated from the leftmost side to the rightmost side of a specific 20 MHz band/channel. Three users/STAs may be allocated to the 106-RU in a MU-MIMO manner. As a result, a total of 8 users/STAs are allocated to the 20 MHz band/channel, and the user-specific field of HE-SIG-B may include 8 user fields (i.e., 4 user block fields). Eight user fields may be assigned to RUs as shown in FIG. 12.

The user field may be constructed based on two formats. The user field for a MU-MIMO allocation may be constructed with a first format, and the user field for non-MU-MIMO allocation may be constructed with a second format. Referring to the example of FIG. 12, user fields 1 to 3 may be based on the first format, and user fields 4 to 8 may be based on the second format. The first format and the second format may contain bit information of the same length (e.g., 21 bits).

The user field of the first format (i.e., format for MU-MIMO allocation) may be constructed as follows. For example, out of all 21 bits of one user field, B0-B10 includes the user's identification information (e.g., STA-ID, AID, partial AID, etc.), B11-14 includes spatial configuration information such as the number of spatial streams for the corresponding user, B15-B18 includes Modulation and Coding Scheme (MCS) information applied to the Data field of the corresponding PPDU, B19 is defined as a reserved field, and B20 may include information on a coding type (e.g., binary convolutional coding (BCC) or low-density parity check (LDPC)) applied to the Data field of the corresponding PPDU.

The user field of the second format (i.e., the format for non-MU-MIMO allocation) may be constructed as follows. For example, out of all 21 bits of one user field, B0-B10 includes the user's identification information (e.g., STA-ID, AID, partial AID, etc.), B11-13 includes information on the number of spatial streams (NSTS) applied to the corresponding RU, B14 includes information indicating whether beamforming is performed (or whether a beamforming steering matrix is applied), B15-B18 includes Modulation and Coding Scheme (MCS) information applied to the Data field of the corresponding PPDU, B19 includes information indicating whether DCM (dual carrier modulation) is applied, and B20 may include information on a coding type (e.g., BCC or LDPC) applied to the Data field of the corresponding PPDU.

MCS, MCS information, MCS index, MCS field, and the like used in the present disclosure may be indicated by a specific index value. For example, MCS information may be indicated as index 0 to index 11. MCS information includes information on constellation modulation type (e.g., BPSK, QPSK, 16-QAM, 64-QAM, 256-QAM, 1024-QAM, etc.), and coding rate (e.g., 1/2, 2/3, 3/4, 5/6, etc.). Information on a channel coding type (e.g., BCC or LDPC) may be excluded from the MCS information.

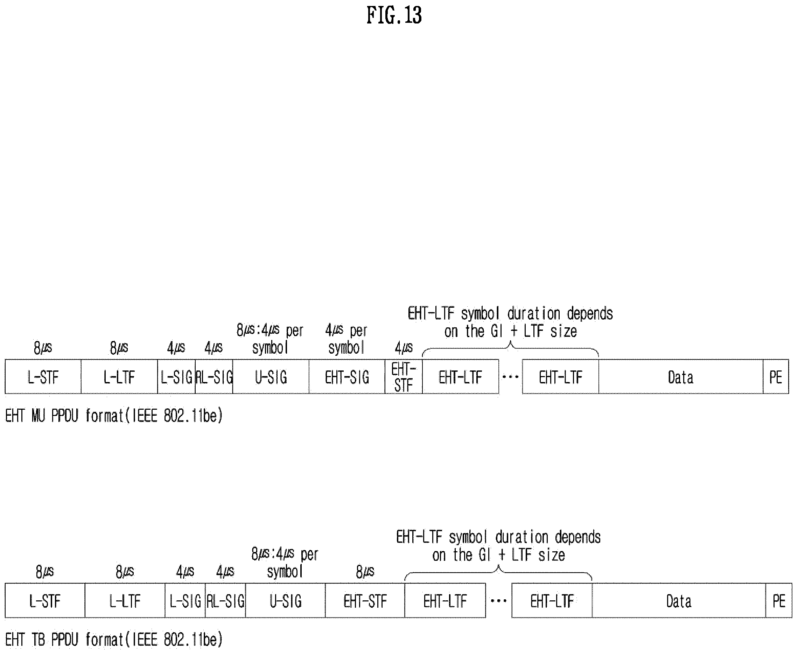

FIG. 13 illustrates an example of a PPDU format to which the present disclosure may be applied.

The PPDU of FIG. 13 may be referred as various names such as an EHT PPDU, a transmitted PPDU, a received PPDU, a first type or an Nth type PPDU. For example, the PPDU or EHT PPDU of the present disclosure may be referred as various names such as a transmission PPDU, a reception PPDU, a first type or an Nth type PPDU. In addition, the EHT PPU may be used in an EHT system and/or a new wireless LAN system in which the EHT system is improved.

The EHT MU PPDU of FIG. 13 corresponds to a PPDU carrying one or more data (or PSDUs) for one or more users. That is, the EHT MU PPDU may be used for both SU transmission and MU transmission. For example, the EHT MU PPDU may correspond to a PPDU for one receiving STA or a plurality of receiving STAs.

In the EHT TB PPDU of FIG. 13, the EHT-SIG is omitted compared to the EHT MU PPDU. Upon receiving a trigger for UL MU transmission (e.g., a trigger frame or TRS), the STA may perform UL transmission based on the EHT TB PPDU format.

In the example of the EHT PPDU format of FIG. 13, L-STF to EHT-LTF correspond to a preamble or a physical preamble, and may be generated/transmitted/received/acquired/decoded in the physical layer.

A Subcarrier frequency spacing of L-STF, L-LTF, L-SIG, RL-SIG, Universal SIGNAL (U-SIG), EHT-SIG field (these are referred to as pre-EHT modulated fields) may be set to 312.5 kHz. A subcarrier frequency spacing of the EHT-STF, EHT-LTF, Data, and PE field (these are referred to as EHT modulated fields) may be set to 78.125 kHz. That is, the tone/subcarrier index of L-STF, L-LTF, L-SIG, RL-SIG, U-SIG, and EHT-SIG field may be indicated in units of 312.5 kHz, and the tone/subcarrier index of EHT-STF, EHT-LTF, Data, and PE field may be indicated in units of 78.125 kHz.

The L-LTF and L-STF of FIG. 13 may be constructed identically to the corresponding fields of the PPDU described in FIGS. 6 to 7.

The L-SIG field of FIG. 13 may be constructed with 24 bits and may be used to communicate rate and length information. For example, the L-SIG field includes a 4-bit Rate field, a 1-bit Reserved bit, a 12-bit Length field, a 1-bit Parity field, and a 6-bit Tail field may be included. For example, the 12-bit Length field may include information on a time duration or a length of the PPDU. For example, a value of the 12-bit Length field may be determined based on the type of PPDU. For example, for a non-HT, HT, VHT, or EHT PPDU, the value of the Length field may be determined as a multiple of 3. For example, for the HE PPDU, the value of the Length field may be determined as a multiple of 3 + 1 or a multiple of 3 + 2.

For example, the transmitting STA may apply BCC encoding based on a coding rate of 1/2 to 24-bit information of the L-SIG field. Thereafter, the transmitting STA may obtain 48-bit BCC coded bits. BPSK modulation may be applied to 48-bit coded bits to generate 48 BPSK symbols. The transmitting STA may map 48 BPSK symbols to any location except for a pilot subcarrier (e.g., {subcarrier index -21, -7, +7, +21}) and a DC subcarrier (e.g., {subcarrier index 0}). As a result, 48 BPSK symbols may be mapped to subcarrier indices -26 to -22, - 20 to -8, -6 to -1, +1 to +6, +8 to +20, and +22 to +26. The transmitting STA may additionally map the signals of {-1, -1, -1, 1} to the subcarrier index {-28, -27, +27, +28}. The above signal may be used for channel estimation in the frequency domain corresponding to {-28, -27, +27, +28}.

The transmitting STA may construct RL-SIG which is constructed identically to L-SIG. For RL-SIG, BPSK modulation is applied. The receiving STA may recognize that the received PPDU is a HE PPDU or an EHT PPDU based on the existence of the RL-SIG.

After the RL-SIG of FIG. 13, a Universal SIG (U-SIG) may be inserted. The U-SIG may be referred as various names such as a first SIG field, a first SIG, a first type SIG, a control signal, a control signal field, and a first (type) control signal, etc.

The U-SIG may include N-bit information and may include information for identifying the type of EHT PPDU. For example, U-SIG may be configured based on two symbols (e.g., two consecutive OFDM symbols). Each symbol (e.g., OFDM symbol) for the U-SIG may have a duration of 4us, and the U-SIG may have a total 8us duration. Each symbol of the U-SIG may be used to transmit 26 bit information. For example, each symbol of the U-SIG may be transmitted and received based on 52 data tones and 4 pilot tones.

Through the U-SIG (or U-SIG field), for example, A bit information (e.g., 52 un-coded bits) may be transmitted, the first symbol of the U-SIG (e.g., U-SIG-1) may transmit the first X bit information (e.g., 26 un-coded bits) of the total A bit information, and the second symbol of the U-SIG (e.g., U-SIG-2) may transmit the remaining Y-bit information (e.g., 26 un-coded bits) of the total A-bit information. For example, the transmitting STA may obtain 26 un-coded bits included in each U-SIG symbol. The transmitting STA may generate 52-coded bits by performing convolutional encoding (e.g., BCC encoding) based on a rate of R = 1/2, and perform interleaving on the 52-coded bits. The transmitting STA may generate 52 BPSK symbols allocated to each U-SIG symbol by performing BPSK modulation on the interleaved 52-coded bits. One U-SIG symbol may be transmitted based on 56 tones (subcarriers) from subcarrier index -28 to subcarrier index +28, except for DC index 0. The 52 BPSK symbols generated by the transmitting STA may be transmitted based on the remaining tones (subcarriers) excluding pilot tones -21, -7, +7, and +21 tones.

For example, the A bit information (e.g., 52 un-coded bits) transmitted by the U-SIG includes a CRC field (e.g., a 4-bit field) and a tail field (e.g., 6 bit-length field). The CRC field and the tail field may be transmitted through the second symbol of the U-SIG. The CRC field may be constructed based on 26 bits allocated to the first symbol of U-SIG and 16 bits remaining except for the CRC/tail field in the second symbol, and may be constructed based on a conventional CRC calculation algorithm. In addition, the tail field may be used to terminate the trellis of the convolution decoder, and for example, the tail field may be set to 0.

A bit information (e.g., 52 un-coded bits) transmitted by the U-SIG (or U-SIG field) may be divided into version-independent bits and version-independent bits. For example, a size of the version-independent bits may be fixed or variable. For example, the version-independent bits may be allocated only to the first symbol of U-SIG, or the version-independent bits may be allocated to both the first symbol and the second symbol of U-SIG. For example, the version-independent bits and the version-dependent bits may be referred as various names such as a first control bit and a second control bit, etc.

For example, the version-independent bits of the U-SIG may include a 3-bit physical layer version identifier (PHY version identifier). For example, the 3-bit PHY version identifier may include information related to the PHY version of the transmitted/received PPDU. For example, the first value of the 3-bit PHY version identifier may indicate that the transmission/reception PPDU is an EHT PPDU. In other words, when transmitting the EHT PPDU, the transmitting STA may set the 3-bit PHY version identifier to a first value. In other words, the receiving STA may determine that the received PPDU is an EHT PPDU based on the PHY version identifier having the first value.

For example, the version-independent bits of U-SIG may include a 1-bit UL/DL flag field. A first value of the 1-bit UL/DL flag field is related to UL communication, and a second value of the UL/DL flag field is related to DL communication.

For example, the version-independent bits of the U-SIG may include information on the length of a transmission opportunity (TXOP) and information on a BSS color ID.

For example, if the EHT PPDU is classified into various types (e.g., EHT PPDU related to SU mode, EHT PPDU related to MU mode, EHT PPDU related to TB mode, EHT PPDU related to Extended Range transmission, etc.), information on the type of EHT PPDU may be included in the version-dependent bits of the U-SIG.

For example, the U-SIG may include information on 1) a bandwidth field containing information on a bandwidth, 2) a field containing information on a MCS scheme applied to EHT-SIG, 3) an indication field containing information related to whether the DCM technique is applied to the EHT-SIG, 4) a field containing information on the number of symbols used for EHT-SIG, 5) a field containing information on whether EHT-SIG is constructed over all bands, 6) a field containing information on the type of EHT-LTF/STF, and 7) a field indicating the length of EHT-LTF and CP length.

Preamble puncturing may be applied to the PPDU of Fig. 13. Preamble puncturing may mean transmission of a PPDU in which no signal is present in one or more 20 MHz subchannels among the bandwidth of the PPDU. Preamble puncturing may be applied to a PPDU transmitted to one or more users. For example, the resolution of the preamble puncturing may be 20 MHz for an EHT MU PPDU in an OFDMA transmission with a bandwidth greater than 40 MHz and in a non-OFDMA transmission with a bandwidth of 80 MHz and 160 MHz. That is, in the above case, puncturing for a subchannel smaller than 242-tone RU may not be allowed. In addition, for an EHT MU PPDU in a non-OFDMA transmission with a bandwidth of 320 MHz, the resolution of the preamble puncturing may be 40 MHz. That is, puncturing for subchannels smaller than 484-tone RU in 320 MHz bandwidth may not be allowed. Also, preamble puncturing may not be applied for the primary 20 MHz channel in EHT MU PPDU.

Information about preamble puncturing applied to PPDU may be included in U-SIG and/or EHT-SIG. For example, the first field of U-SIG may include information about the contiguous bandwidth of the PPDU, and the second field of U-SIG may include information about preamble puncturing applied to the PPDU.

For example, the U-SIG and the EHT-SIG may include information on preamble puncturing based on the following method. If the bandwidth of the PPDU exceeds 80 MHz, the U-SIG may be individually constructed in units of 80 MHz. For example, if the bandwidth of the PPDU is 160 MHz, the PPDU may include a first U-SIG for a first 80 MHz band and a second U-SIG for a second 80 MHz band. In this case, the first field of the first U-SIG includes information on the 160 MHz bandwidth, and the second field of the first U-SIG includes information on preamble puncturing applied to the first 80 MHz band (i.e., information on a preamble puncturing pattern). In addition, the first field of the second U-SIG includes information on a 160 MHz bandwidth, and the second field of the second U-SIG includes information on preamble puncturing applied to a second 80 MHz band (i.e., information on a preamble puncturing pattern). The EHT-SIG following the first U-SIG may include information on preamble puncturing applied to the second 80 MHz band (i.e., information on a preamble puncturing pattern), and the EHT-SIG following the second U-SIG may include information on preamble puncturing applied to the first 80 MHz band (i.e., information on a preamble puncturing pattern).

Additionally or alternatively, the U-SIG and the EHT-SIG may include information on preamble puncturing based on the following method. The U-SIG may include information on preamble puncturing for all bands (i.e., information on a preamble puncturing pattern). That is, EHT-SIG does not include information on preamble puncturing, and only U-SIG may include information on preamble puncturing (i.e., information on a preamble puncturing pattern).

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

The EHT-SIG of FIG. 13 may include control information for the receiving STA. EHT-SIG may be transmitted through at least one symbol, and one symbol may have a length of 4us. Information on the number of symbols used for EHT-SIG may be included in U-SIG.

The EHT-SIG may include technical features of HE-SIG-B described through FIGS. 11 and 12. For example, EHT-SIG, like the example of FIG. 8, may include a common field and a user-specific field. The Common field of the EHT-SIG may be omitted, and the number of user-specific fields may be determined based on the number of users.

As in the example of FIG. 11, the common field of the EHT-SIG and the user-specific field of the EHT-SIG may be coded separately. One user block field included in the user-specific field may contain information for two user fields, but the last user block field included in the user-specific field may contain one or two user fields. That is, one user block field of the EHT-SIG may contain up to two user fields. As in the example of FIG. 12, each user field may be related to MU-MIMO allocation or non-MU-MIMO allocation.

In the same way as in the example of FIG. 11, the common field of the EHT-SIG may include a CRC bit and a Tail bit, The length of the CRC bit may be determined as 4 bits, and the length of the tail bit is determined by 6 bits and may be set to 000000.

As in the example of FIG. 11, the common field of the EHT-SIG may include RU allocation information. RU allocation information may mean information on the location of an RU to which a plurality of users (i.e., a plurality of receiving STAs) are allocated. RU allocation information may be configured in units of 9 bits (or N bits).

A mode in which a common field of EHT-SIG is omitted may be supported. The mode in which the common field of the EHT-SIG is omitted may be referred as a compressed mode. When the compressed mode is used, a plurality of users (i.e., a plurality of receiving STAs) of the EHT PPDU may decode the PPDU (e.g., the data field of the PPDU) based on non-OFDMA. That is, a plurality of users of the EHT PPDU may decode a PPDU (e.g., a data field of the PPDU) received through the same frequency band. When a non-compressed mode is used, multiple users of the EHT PPDU may decode the PPDU (e.g., the data field of the PPDU) based on OFDMA. That is, a plurality of users of the EHT PPDU may receive the PPDU (e.g., the data field of the PPDU) through different frequency bands.

EHT-SIG may be constructed based on various MCS scheme. As described above, information related to the MCS scheme applied to the EHT-SIG may be included in the U-SIG. The EHT-SIG may be constructed based on the DCM scheme. The DCM scheme may reuse the same signal on two subcarriers to provide an effect similar to frequency diversity, reduce interference, and improve coverage. For example, modulation symbols to which the same modulation scheme is applied may be repeatedly mapped on available tones/subcarriers. For example, modulation symbols (e.g., BPSK modulation symbols) to which a specific modulation scheme is applied may be mapped to first contiguous half tones (e.g., 1st to 26th tones) among the N data tones (e.g., 52 data tones) allocated for EHT-SIG, and modulation symbols (e.g., BPSK modulation symbols) to which the same specific modulation scheme is applied may be mapped to the remaining contiguous half tones (e.g., 27th to 52nd tones). That is, a modulation symbol mapped to the 1st tone and a modulation symbol mapped to the 27th tone are the same.

As described above, information related to whether the DCM scheme is applied to the EHT-SIG (e.g., a 1-bit field) may be included in the U-SIG. The EHT-STF of FIG. 13 may be used to enhance automatic gain control (AGC) estimation in a MIMO environment or an OFDMA environment. The EHT-LTF of FIG. 13 may be used to estimate a channel in a MIMO environment or an OFDMA environment.

Information on the type of STF and/or LTF (including information on a guard interval (GI) applied to LTF) may be included in the U-SIG field and/or the EHT-SIG field of FIG. 13.

The PPDU (i.e., EHT PPDU) of FIG. 13 may be constructed based on an example of RU allocation of FIGS. 8 to 10.

For example, a EHT PPDU transmitted on a 20 MHz band, that is, a 20 MHz EHT PPDU may be constructed based on the RU of FIG. 8. That is, a RU location of EHT-STF, EHT-LTF, and data field included in the EHT PPDU may be determined as shown in FIG. 8. A EHT PPDU transmitted on a 40 MHz band, that is, a 40 MHz EHT PPDU may be constructed based on the RU of FIG. 9. That is, a RU location of EHT-STF, EHT-LTF, and data field included in the EHT PPDU may be determined as shown in FIG. 9.

The EHT PPDU transmitted on the 80 MHz band, that is, the 80 MHz EHT PPDU may be constructed based on the RU of FIG. 10. That is, a RU location of EHT-STF, EHT-LTF, and data field included in the EHT PPDU may be determined as shown in FIG. 10. The tone-plan for 80 MHz in FIG. 10 may correspond to two repetitions of the tone-plan for 40 MHz in FIG. 9.

The tone-plan for 160/240/320 MHz may be configured in the form of repeating the pattern of FIG. 9 or 10 several times.

The PPDU of FIG. 13 may be identified as an EHT PPDU based on the following method.

The receiving STA may determine the type of the received PPDU as the EHT PPDU based on the following. For example, when 1) the first symbol after the L-LTF signal of the received PPDU is BPSK, 2) RL-SIG in which the L-SIG of the received PPDU is repeated is detected, and 3) the result of applying the modulo 3 calculation to the value of the Length field of the L-SIG of the received PPDU (i.e., the remainder after dividing by 3) is detected as 0, the received PPDU may be determined as a EHT PPDU. When the received PPDU is determined to be an EHT PPDU, the receiving STA may determine the type of the EHT PPDU based on bit information included in symbols subsequent to the RL-SIG of FIG. 13. In other words, the receiving STA may determine the received PPDU as a EHT PPDU, based on 1) the first symbol after the L-LTF signal, which is BSPK, 2) RL-SIG contiguous to the L-SIG field and identical to the L-SIG, and 3) L-SIG including a Length field in which the result of applying modulo 3 is set to 0.

For example, the receiving STA may determine the type of the received PPDU as the HE PPDU based on the following. For example, when 1) the first symbol after the L-LTF signal is BPSK, 2) RL-SIG in which L-SIG is repeated is detected, and 3) the result of applying modulo 3 to the length value of L-SIG is detected as 1 or 2, the received PPDU may be determined as a HE PPDU.

For example, the receiving STA may determine the type of the received PPDU as non-HT, HT, and VHT PPDU based on the following. For example, when 1) the first symbol after the L-LTF signal is BPSK and 2) RL-SIG in which L-SIG is repeated is not detected, the received PPDU may be determined as non-HT, HT, and VHT PPDU.

In addition, if the receiving STA detects an RL-SIG in which an L-SIG is repeated in the received PPDU, it can be determined that it is a HE PPDU or an EHT PPDU. In this case, if the rate (6 Mbps) check fails, the received PPDU can be determined as a non-HT, HT, or VHT PPDU. If the rate (6 Mbps) check and the parity check pass, if the result of applying modulo 3 to the Length value of the L-SIG is detected as 0, the received PPDU can be determined as an EHT PPDU, and if the result of Length mod 3 is not 0, it can be determined as a HE PPDU.

The PPDU of FIG. 13 may be used to transmit and receive various types of frames. For example, the PPDU of FIG. 13 may be used for (simultaneous) transmission and reception of one or more of a control frame, a management frame, or a data frame.

Hereinafter, the U-SIG included in the EHT PPDU is described in more detail.

For a 40 MHz EHT PPDU or Extended Range (ER) preamble, the U-SIG content is the same in both 20 MHz subchannels. For an 80 MHz EHT PPDU or ER preamble, the U-SIG content is the same in all non-punctured 20 MHz subchannels. For a 160/320 MHz EHT PPDU or ER preamble, the U-SIG content is the same on all non-punctured 20 MHz subchannels within each 80 MHz subblock and may be different from the U-SIG content in other 80 MHz subblocks.

The U-SIG-1 part of the U-SIG of the EHT MU PPDU may include a PHY version identifier (B0-B2), BW (B3-B5), UL/DL (B6), BSS color (B7-B12), TXOP (B13-B19), Disregard (B20-B24), and Validate (B25).

And, the U-SIG-2 part of the EHT MU PPDU may include PPDU type and compression mode (B0-B1), validate (B2), punctured channel information (B3-B7), validation (B8), EHT-SIG MCS (B9-B10), number of EHT-SIG symbols (B11-B15), CRC (B16-B19), and tail (B20-B25).

For example, assume that the UL/DL field value is set to 0. When the PPDU Type and Compression Mode (B0-B1) field value of the U-SIG-2 part is 0, this indicates DL OFDMA transmission. When the PPDU Type and Compression Mode (B0-B1) field value of the U-SIG-2 part is 1, this indicates EHT SU transmission or EHT sounding NDP. When the PPDU Type and Compression Mode (B0-B1) field value of the U-SIG-2 part is 2, this indicates non-OFDMA DL MU-MIMO transmission.

As another example, assume that the UL/DL field value is set to 1. When the PPDU Type and Compression Mode (B0-B1) field value of the U-SIG-2 part is 0, this may indicate a TB PPDU (e.g., UL OFDMA or UL-non-OFDMA). And, when the PPDU Type and Compression Mode (B0-B1) field value of the U-SIG-2 part is 1, this may indicate an EHT SU transmission or an EHT sounding NDP.

Here, an example of a 5-bit punctured channel indication for a non-OFDMA case in the EHT MU PPDU is shown in Table 1 below.

【Table 1】

| PPDU bandwidth | Cases | Puncturing pattern | Field value |
|---|---|---|---|
| 20/40 MHz | No puncturing | [1 1 1 1] | 0 |
| 80 MHz | No puncturing | [1 1 1 1] | 0 |
| | 20 MHz puncturing | [x 1 1 1] | 1 |
| | | [1 x 1 1] | 2 |
| | | [1 1 x 1] | 3 |
| | | [1 1 1 x] | 4 |
| 160 MHz | No puncturing | [1 1 1 1 1 1 1 1] | 0 |
| | 20 MHz puncturing | [x 1 1 1 1 1 1 1] | 1 |
| | | [1 x 1 1 1 1 1 1] | 2 |
| | | [1 1 x 1 1 1 1 1] | 3 |
| | | [1 1 1 x 1 1 1 1] | 4 |
| | | [1 1 1 1 x 1 1 1] | 5 |
| | | [1 1 1 1 1 x 1 1] | 6 |
| | | [1 1 1 1 1 1 x 1] | 7 |
| | | [1 1 1 1 1 1 1 x] | 8 |
| | 40 MHz puncturing | [x x 1 1 1 1 1 1] | 9 |
| | | [1 1 x x 1 1 1 1] | 10 |
| | | [1 1 1 1 x x 1 1] | 11 |
| | | [1 1 1 1 1 1 x x] | 12 |

| | | | |
|---|---|---|---|
| 320 MHz | | No puncturing | [1 1 1 1 1 1 1 1] | 0 |
| | 40 MHz puncturing | [x 1 1 1 1 1 1 1] | 1 |
| | | [1 x 1 1 1 1 1 1] | 2 |
| | | [1 1 x 1 1 1 1 1] | 3 |
| | | [1 1 1 x 1 1 1 1] | 4 |
| | | [1 1 1 1 x 1 1 1] | 5 |
| | | [1 1 1 1 1 x 1 1] | 6 |
| | | [1 1 1 1 1 1 x 1] | 7 |
| | | [1 1 1 1 1 1 1 x] | 8 |
| | 80 MHz puncturing | [x x 1 1 1 1 1 1] | 9 |
| | | [1 1 x x 1 1 1 1] | 10 |
| | | [1 1 1 1 x x 1 1] | 11 |
| | | [1 1 1 1 1 1 x x] | 12 |
| | 320-80-40 | [x x x 1 1 1 1 1] | 13 |
| | | [x x 1 x 1 1 1 1] | 14 |
| | | [x x 1 1 x 1 1 1] | 15 |
| | | [x x 1 1 1 x 1 1] | 16 |
| | | [x x 1 1 1 1 x 1] | 17 |
| | | [x x 1 1 1 1 1 x] | 18 |
| | | [x 1 1 1 1 1 x x] | 19 |
| | | [1 x 1 1 1 1 x x] | 20 |
| | | [1 1 x 1 1 1 x x] | 21 |
| | | [1 1 1 x 1 1 x x] | 22 |
| | | [1 1 1 1 x 1 x x] | 23 |
| | | [1 1 1 1 1 x x x] | 24 |

In the puncturing pattern of Table 1, 1 denotes a non-punctured subchannel, and x denotes a punctured subchannel. The puncturing granularity for the 80 MHz and 160 MHz PPDU bandwidths may be 20 MHz, and the puncturing granularity for the 320 MHz PPDU bandwidth may be 40 MHz.

Next, the U-SIG-1 part of the U-SIG of the EHT TB PPDU may include a version identifier (B0-B2), BW (B3-B5), UL/DL (B6), BSS color (B7-B12), TXOP (B13-B19), and disregard (B20-B25), and U-SIG-2 part may include PPDU type and compression mode (B0-B1), validate (B2), spatial reuse 1 (B3-B6), spatial reuse 2 (B7-B10), disregard (B11-B15), CRC (B16-B19), and tail (B20-B25).

As described above, the U-SIG field of the EHT MU PPDU includes 5-bit punctured channel information, but the EHT TB PPDU does not include punctured channel information. This is because it is assumed that the EHT TB PPDU is constructed according to resource allocation indicated by the trigger frame or TRS control information, so the STA does not need to inform the AP of the resource information of the EHT TB PPDU.

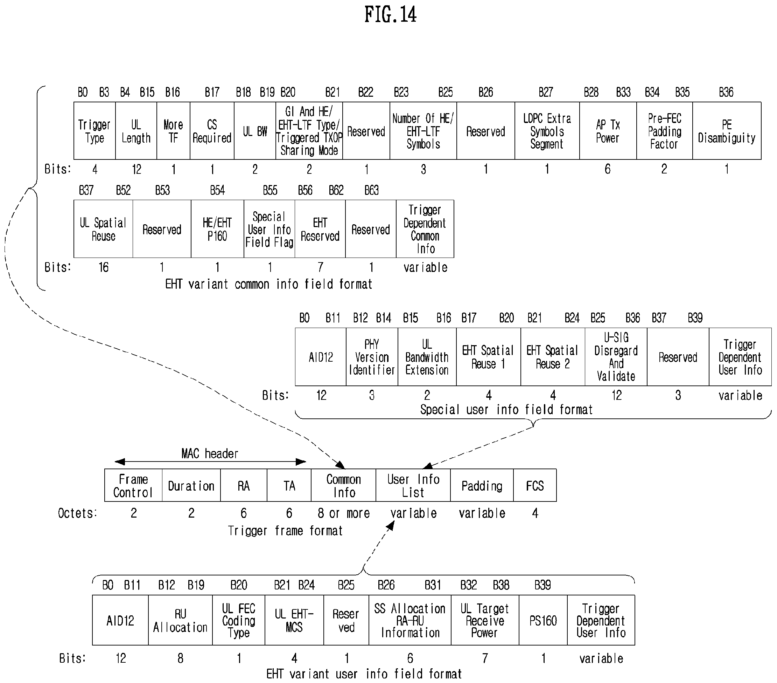

FIG. 14 illustrates an example format of a trigger frame to which the present disclosure may be applied.

The trigger frame may allocate resources for transmission of one or more TB PPDUs and request transmission of TB PPDUs. The trigger frame may also include other information required by the STA, which transmits the TB PPDU in response. The trigger frame may include common information and user information list fields in the frame body.

The common info (information) field is information commonly applied to the transmission of one or more TB PPDUs requested by a trigger frame, such as trigger type, UL length, presence or absence of a subsequent trigger frame (e.g., More TF), CS (channel sensing) request, UL BW (bandwidth), HE/EHT P160, special user info field flag, etc.

The 4-bit trigger type subfield may have values from 0 to 15. Among them, the values 0, 1, 2, 3, 4, 5, 6, and 7 of the trigger type subfield are defined to correspond to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and the values 8 to 15 are defined as reserved.

Among the common information, the trigger dependent common info subfield may include information that is optionally included based on the trigger type.

A special user info field may be included in the trigger frame. The special user info field does not include user specific information, but includes extended common information that is not provided in the common info field.

The user info list includes zero or more user info fields. FIG. 14 illustrates an example of an EHT variant user info field format.

The AID12 subfield basically indicates that it is a user info field for the STA with the corresponding AID. In addition, if the AID12 field has a specific predetermined value, it may be used for other purposes, such as allocating a random access (RA)-RU or being configured as a special user info field. A special user info field is a user info field that does not include user-specific information but includes extended common information not provided in the common info field. For example, the special user info field may be identified by an AID12 value of 2007, and the special user info field flag subfield within the common info field may indicate whether the special user info field is included.

The RU allocation subfield may indicate the size and location of the RU/MRU. To this end, the RU allocation subfield may be interpreted together with the PS160 (primary/secondary 160MHz) subfield of the user info field and the UL BW subfield of the common info field.

Multi-Access Point (MAP) Operation

Hereinafter, examples of the present disclosure for multi-access point (MAP) operation are described.

MAP operation may be defined as an operation between a master AP (or sharing AP) and a slave AP (or shared AP).

The master AP initiates and controls MAP operations for transmission and reception between multiple APs. The master AP groups slave APs and manages links with slave APs so that information can be shared between the slave APs. The master AP manages information on the BSSs configured by the slave APs and information on STAs associated with the BSS.

A slave AP may associate with a master AP and share control information, management information, and data traffic with each other. A slave AP performs the same basic functions of an AP that can establish a BSS in a wireless LAN.

In MAP operation, an STA may associate with a slave AP or a master AP and form a BSS.

In a MAP environment, a master AP and a slave AP may perform direct transmission and reception with each other. A master AP and a STA may not perform direct transmission and reception with each other. A slave AP (e.g., a slave AP associated with an STA) may perform direct transmission and reception with the STA. One of the slave APs may become a master AP.

MAP operation is a technique in which one or more APs transmit and receive information to one or more STAs. For example, coordinated-time division multiple access (C-TDMA) that divides allocation between APs along the time axis, coordinated-orthogonal frequency division multiple access (C-OFDMA) that divides allocation between APs along the frequency axis, and coordinated-spatial reuse (C-SR) that utilizes spatial reuse can be applied for the MAP operation. Alternatively, coordinated beamforming (C-BF) or joint beamforming techniques that cooperatively perform simultaneous transmission and reception may also be applied to the MAP operation.

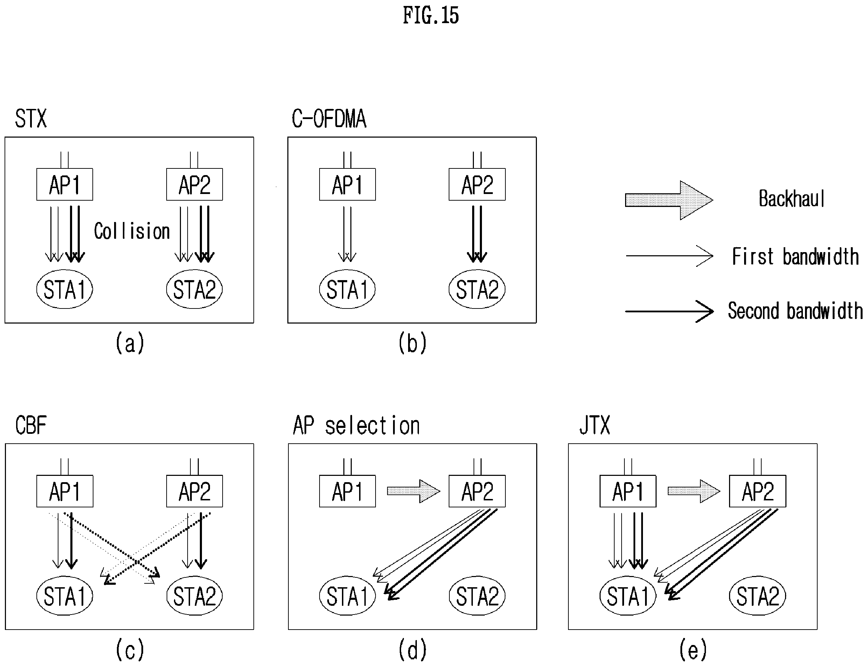

FIG. 15 is a diagram for describing various transmission and reception techniques in a MAP environment to which the present disclosure may be applied.

As in the conventional method, when a BSS AP transmits to a BSS STA, it may be referred to as STX (single transmission). In STX, there is a problem that the performance of transmission and reception for users/STAs located at the cell edge is reduced due to interference with adjacent APs. For example, as shown in Fig. 15(a), when AP 1 and AP 2 transmit to STA1 and STA2, respectively, at the same time in the same frequency bandwidth, a collision may occur on the wireless medium.

In the MAP technique, performance can be improved by reducing inter-symbol interference (ISI) through cooperation between neighboring APs, or by performing joint transmission. For example, in the C-OFDMA method of Fig. 15(b), interference can be avoided by having AP1 transmit to STA1 in the first bandwidth and AP2 transmit to STA2 in the second bandwidth at the same time.

The example of Fig. 15(c) illustrates a cooperative beamforming or nulling technique in which interference to AP2 and/or STA2 is nulled while AP1 transmits to STA1, and interference to AP1 and/or STA1 is nulled while AP2 transmits to STA2.

FIG. 15(d) shows an AP selection method in which an AP with a good channel condition among adjacent APs performs transmission.

Joint transmission (JTX) or joint reception (JRX) may be applied, in which multiple APs cooperate to transmit or receive simultaneously, as in the example of Fig. 15(e), and further, joint MU-MIMO may be supported.

C-SR(coordinated spatial reuse) technique

When the SP technique is applied in a basic wireless LAN system, the status of the BSS AP may be transmitted (by the BSS AP) through a trigger frame or TB PPDU, etc. If the OBSS AP can transmit data in a situation satisfying Equation 1, the C-SR technique may control the power of the BSS AP/STA as well as the power of the OBSS AP/STA.

【Equation 1】

$$TxPower_{PSRT,total} - 10 \times log_{10}N_{PSRT,nonpunc} \leq PSR_{min} - RPL_{PSRT,20MHz}$$

In Equation 1, PSR is the SR value of the trigger frame and the SIG field of the TB PPDU, and RPL may mean the received signal power.

In order to apply the C-SR technique, the interference situation of BSS AP/STA and/or OBSS AP/STA must be confirmed.

The following describes the procedure for performing C-SR with OBSS AP/STA from the perspective of BSS AP/STA. Here, BSS AP is either Sharing AP or Shared AP, and OBSS AP may be interpreted as a shared AP that performs C-SR together.

The C-SR procedure may consist of a pre-procedure, a Shared AP(s) candidate selection procedure, a C-SR setup procedure, and a data transmission procedure.

The pre-procedure refers to a procedure for reporting and collecting information to be exchanged in advance for C-SR operation. APs/STAs may obtain channel information of BSS/OBSS APs/STAs based on the direction of the frame that is the target of the C-SR operation (e.g., DL direction or UL direction).

For example, a BSS STA may obtain channel information from an on-going packet or NDP sounding frame of an OBSS AP and transmit the obtained channel information to the BSS AP.

In addition, in order to apply C-SR in RU units, acquisition of channel information in RU units rather than full-band may be required. For example, a BSS STA may acquire channel information in RU units from an NDP sounding frame of an OBSS AP and report the acquired channel information in RU units to the BSS AP.

In the case of the Shared AP(s) candidate selection procedure, the Sharing AP can select the Shared AP(s) candidate by collecting information about neighboring APs.

For example, assume that nulling is not required based on the distance between APs (e.g., the distance between APs is not too close). In this case, if the RSSI measurement value related to the AP is within a specific value (e.g., -82dBM), the Sharing AP may select the Shared AP(s) from among the AP(s) whose channel status is busy.

The C-SR setup procedure may include a procedure for selecting shared AP(s) to exchange C-SR data (before starting C-SR data transmission) and confirming whether C-SR data may be transmitted or received with the selected shared AP(s). The C-SR setup procedure may be performed before SIFS of the C-SR data transmission procedure.

Some parts of the C-SR setup procedure may be omitted. For example, at least one of the procedures for checking whether the selected Shared AP(s) may transmit and receive C-SR data or the procedure for selecting the shared AP(s) with which to exchange C-SR data may be omitted.

For example, when a trigger frame for C-SR setup is transmitted (by the Sharing AP) to the Shared AP(s), the Shared AP(s) capable of transmitting and receiving C-SR data may transmit a confirm message indicating whether C-SR data transmission and reception is possible or not to the Sharing AP. Accordingly, the Sharing AP may confirm whether the Shared AP(s) can transmit and receive C-SR data.

The data transmission procedure may include a procedure for transmitting a C-SR trigger frame (or a separate DL frame) for C-SR data transmission and a procedure for OBSS/BSS APs to transmit and receive C-SR data based on the C-SR trigger frame. The C-SR trigger frame may be configured based on the trigger frame illustrated in FIG. 14.

Here, the C-SR trigger frame (or a separate DL frame) may include basic information for performing a C-SR operation (i.e., C-SR data transmission and reception). For example, the basic information may include information such as transmit power (Tx power) of the BSS AP (or, Sharing AP), a Tx power limit value to be used by the Shared AP(s), an acceptable interference level of the BSS AP (or, Sharing AP), TXOP duration, DL frame length, DL/UL type of the Sharing/Shared AP, etc.

A Shared AP that receives a trigger frame may transmit its own data based on the C-SR technique, or may include C-SR information in a trigger frame for data transmission of an OBSS/BSS STA and transmit it.

The method of obtaining channel information in the pre-procedure during the C-SR procedure

Hereinafter, a method of acquiring channel information in a pre-procedure during a C-SR procedure is described. An AP/STA should acquire channel information of BSS/OBSS AP/STA(s) based on the direction of the frame to which the C-SR technique is to be applied (i.e., DL direction or UL direction).

Here, the method for the BSS AP/STA and the OBSS AP/STA to adjust the Tx power using the channel value (e.g., interference value) of the BSS and the method for implementing C-SR can be implemented in various ways.

Method 1

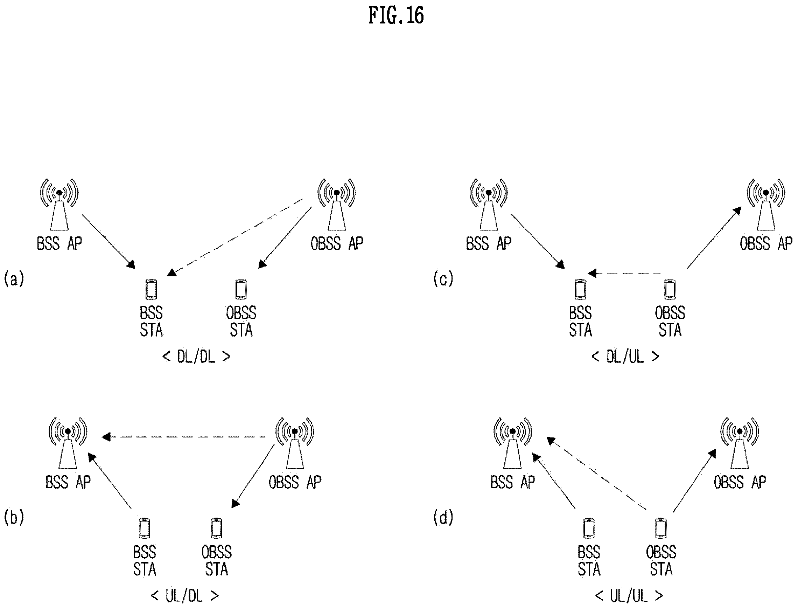

As illustrated in (a) of FIG. 16, Method 1 relates to a method for obtaining channel information when performing DL transmission of a BSS AP and DL transmission of an OBSS AP (hereinafter, "DL/DL"). In order for a BSS AP to transmit a DL frame using the C-SR technique in a DL/DL situation, interference information of the OBSS AP toward the BSS STA is required. Accordingly, the BSS STA may measure a channel value for a DL frame of the OBSS AP and report it to the BSS AP.

For example, the BSS STA may measure the channel value of an on-going packet (e.g., a beacon frame, etc.) of the OBSS AP. That is, the OBSS AP may transmit the on-going packet to the BSS STA, and the BSS STA may obtain the channel value through the received on-going packet. The operation of obtaining the channel value based on the on-going packet may be performed by the instruction of the BSS AP or according to the decision of the BSS STA.

As another example, an NDP sounding procedure (hereinafter, "OBSS NDP sounding") may be performed between an OBSS AP and a BSS STA under the direction of a BSS AP (or, Sharing AP). That is, the BSS STA may obtain a channel value based on the NDP transmitted by the OBSS AP.

In describing the present disclosure, "channel value" may include at least one of RSSI (Received signal strength indication), RPI (Rx Power Indicator), ANPI (Avg Noise Power Indicator), IPI (Idle Power Indicator), RCPI (Rx Channel power Indicator) or RSNI (Rx Signal to Noise Indicator).

Additionally, the channel value measured by the BSS/OBSS AP/STA in the present disclosure may include the overall channel value for the indicated band (by the BSS/OBSS AP), or the channel value for the indicated/allocated RU(s).

Method 2

As illustrated in (b) of FIG. 16, Method 2 relates to a method for obtaining channel information when performing UL reception of a BSS AP and DL transmission (hereinafter, "UL/DL") of an OBSS AP. In a UL/DL situation, in order for a BSS STA to transmit a UL frame using the C-SR technique, interference information of an OBSS AP directed toward the BSS AP may be required. That is, the BSS AP may measure a channel value for a DL frame from the OBSS AP.

For example, a BSS AP may measure the channel value of an on-going packet (e.g., a beacon frame, etc.) of an OBSS AP. In this case, since the BSS AP directly measures/obtains the channel value, a separate reporting procedure for the channel value may not be necessary.

As another example, the BSS AP may obtain the channel value through the OBSS NDP sounding procedure. Since the measurement value feedback procedure for the OBSS NDP for C-SR in the UL/DL situation is not required, the NDP sounding procedure may be completed by the OBSS NDP transmission or the BSS AP's ACK transmission for the OBSS NDP transmission.

As another example, when the OBSS sounding procedure is performed considering a DL/DL situation, the OBSS sounding procedure may include a procedure in which the BSS STA transmits feedback after the OBSS AP transmits NDP.

Method 3

As illustrated in (c) of FIG. 16, Method 3 relates to a method of obtaining channel information when performing DL transmission of a BSS AP and UL reception of an OBSS AP (hereinafter, "DL/UL"). In a DL/UL situation, interference information of an OBSS STA toward a BSS STA may be required for the BSS AP to transmit a DL frame using the C-SR technique.

Accordingly, BSS STA(s) may measure and report channel values for all OBSS STAs supporting the C-SR procedure. At this time, BSS STA(s) may use on-going packets or OBSS NDP sounding procedure.

On the other hand, STA may not be able to measure and report channel values as smoothly as AP. Since there is no regular on-going packet and measurements are required as many as the number of OBSS STAs, the feedback overhead value of BSS STAs may increase in DL/UL situations. Therefore, C-SR technique may not be allowed in DL/UL situations.

Method 4

As illustrated in (d) of FIG. 16, Method 4 relates to a method for obtaining channel information when performing UL reception of a BSS AP and UL reception of an OBSS AP (hereinafter, "UL/UL"). In a UL/UL situation, interference information of an OBSS AP directed toward a BSS AP may be required for a BSS STA to transmit a UL frame using the C-SR technique.

In the "DL/DL" situation, the BSS STA may report the interference channel measurement value from the OBSS AP to the BSS AP. Accordingly, the OBSS AP may receive the channel measurement value from the BSS AP from the OBSS STA based on the OBSS STA. The OBSS AP may transmit the interference channel measurement value received from the OBSS STA to the BSS AP. For example, the OBSS AP may transmit the interference channel measurement value to the BSS AP through a control message over the air or backbone.

Accordingly, the BSS AP may indicate the BSS STA to adjust Tx power for C-SR through a trigger frame. That is, a data sharing procedure between the BSS AP and the OBSS AP may be required for C-SR transmission in a UL/UL situation.

In a basic wireless LAN system, within a duration range in which a BSS STA transmits a HE TB PPDU to a BSS AP, at least one OBSS STA can transmit a PPDU and/or an ACK for the PPDU. The present disclosure describes a method for determining a channel and time for transmitting and receiving an ACK between an OBSS AP/STA when transmitting and receiving a DL frame between BSS AP/STA.

Hereinafter, 'duration' may mean an duration in the time domain (i.e., a time duration). That is, a duration in which a BSS STA transmits a HE TB PPDU to a BSS AP may mean an duration in the time domain in which a BSS STA transmits a HE TB PPDU to a BSS AP. However, the present invention is not limited thereto, and 'duration' may also mean an duration in the frequency domain.

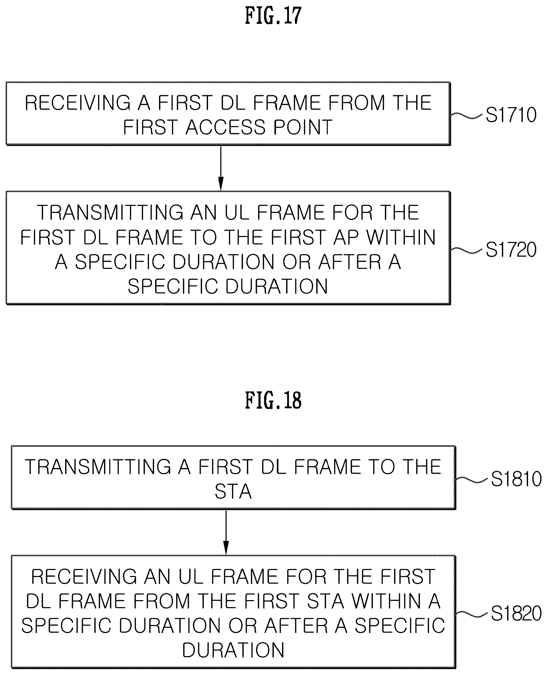

FIG. 17 is a diagram for describing an operation performed by a first STA according to an embodiment of the present disclosure. Hereinafter, the first STA may be an OBSS STA, the second STA may be a BSS STA, the first AP may be an OBSS AP (or, Shared AP), and the second AP may be a BSS AP (or, Sharing AP). That is, the first AP and the second AP may perform a (C-)SR-based multi-AP operation.

The first STA may receive a first downlink (DL) frame from the first access point (AP) (S1710).

For example, while the first STA receives the first DL frame from the first AP, the second STA may receive the second DL frame from the second AP. As another example, the second STA may receive the second DL frame before the first STA receives the first DL frame, and the second STA may receive the second DL frame after the first STA completes receiving the first DL frame.

The first STA may transmit an uplink (UL) frame for the first DL frame to the first AP within a specific duration or after a specific duration (S1720).

Here, the specific duration (e.g., the specific time duration) may include a section in which a second DL frame is transmitted from the second AP to the second STA. For example, the first STA may transmit a first UL frame (e.g., a UL ACK/BA frame, etc.) in the duration in which the second DL frame is transmitted from the second AP to the second STA. As another example, the first STA may be configured/indicated/defined not to transmit the first UL frame in the section in which the second DL frame is transmitted from the second AP to the second STA, and may transmit the first UL frame after the duration.

Specifically, based on the first STA being an STA capable of performing a spatial reuse (SR) operation, the first STA may be permitted to transmit a first UL frame in a specific section.

For example, the first AP may check whether the first STA has the SR capability. If it is confirmed that the first STA is an STA capable of performing the SR operation, the first AP may allow the transmission of the first UL frame within a specific duration. For example, the first AP may transmit information indicating that immediate transmission of the first UL frame is permitted (e.g., information indicating that transmission of the first UL frame is permitted after SIFS after the first DL frame is transmitted) to the first STA.

Accordingly, the first STA may obtain the transmission power of the first UL frame based on the interference level of the second DL frame transmitted from the second AP to the second STA. The first STA may transmit the first UL frame to the first AP (within a specific duration) using the obtained transmission power.

In another example of the present disclosure, based on the first STA being an STA that cannot perform the SR operation, the first UL frame transmission of the first STA may be permitted after a specific duration. That is, if it is determined that the first STA is an STA that cannot perform the SR operation, the first AP may not permit the first UL frame transmission within the specific duration. For example, the first AP may transmit information indicating a delay of the first UL frame transmission to the first STA. Accordingly, the first STA may transmit the first UL frame after the specific duration.

Additionally or alternatively, the end time of the first DL frame and the end time of the second DL frame may be aligned. Accordingly, interference due to the transmission of the first UL frame may not affect the transmission and reception of the second DL frame.

Additionally or alternatively, a dedicated channel may be allocated (by the first AP or/and the second AP) for transmitting the first UL frame. The first STA may transmit the first UL frame to the first AP through the dedicated channel. In this case, the second AP may transmit the second DL frame to the second STA on a channel other than the dedicated channel.

When a dedicated channel is allocated, the first STA may transmit the first UL frame independently/regardlessly in a specific duration. That is, the first STA may freely transmit the first UL frame through the allocated dedicated channel.

Additionally or alternatively, after the dedicated channel is allocated, the first STA may choose to transmit the first UL frame within a specific duration or after a specific time interval. For example, the first STA may transmit the first UL frame over the dedicated channel within the specific duration, but is not limited thereto. The first STA may transmit the first UL frame over the dedicated channel after the specific duration.

As an example of the present disclosure, the first AP or the second AP may transmit information to the first STA via a C-SR trigger frame, which sets a method for transmitting the first UL frame within a specific duration or after a specific duration (e.g., a method for setting a dedicated channel, a method for checking the SR capability of the STA to determine whether to allow transmission of the first UL frame within a specific duration, etc.).

However, this is only one embodiment, and the second AP may transmit information setting a method for transmitting the first UL frame within a specific duration or after a specific duration to the first AP/first STA through a C-SR trigger frame.

The method performed by the first STA described in the example of FIG. 17 may be performed by the first device (100) of FIG. 1. For example, one or more processors (102) of the first device (100) of FIG. 1 may be configured to receive a first DL frame from a first AP via one or more transceivers (106). The one or more processors (102) may be configured to transmit a first UL frame for the first DL frame to a second AP via one or more transceivers (106) within a specific duration or after a specific duration.

Furthermore, one or more memories (104) of the first device (100) may store instructions for performing the method described in the example of FIG. 17 when executed by one or more processors (102).

FIG. 18 is a drawing for explaining an operation performed by a first AP according to one embodiment of the present disclosure.

The first AP may transmit a first downlink (DL) frame to the first station (STA) (S1810).

For example, while the first AP transmits the first DL frame to the first STA, the second AP may transmit the second DL frame to the second STA. As another example, the second AP may transmit the second DL frame before the first AP transmits the first DL frame, and the second AP may transmit the second DL frame after the first AP completes transmitting the first DL frame.

The first AP may receive the first UL frame for the first DL frame from the first STA within a specific duration or after a specific duration (S1820).

For example, the first AP may receive information from the second AP that sets how the first UL frame is transmitted within a specific duration or after a specific duration. As another example, the first AP may transmit information to the first STA that sets how the first UL frame is transmitted within a specific duration or after a specific duration.

However, this is only one embodiment, and the method of transmitting the first UL frame within a specific duration or after a specific duration may be predefined.

The operation of receiving the first UL frame for the first DL frame in a specific duration or within a specific section by the first AP has been described with reference to S1720 of FIG. 17, so any duplicate description will be omitted.

The method performed by the first AP described in the example of FIG. 18 may be performed by the second device (200) of FIG. 1. For example, one or more processors (202) of the second device (200) of FIG. 1 may be configured to receive a first DL frame from a first STA through one or more transceivers (206). The one or more processors (202) may receive a first UL frame for the first DL frame from the first STA through one or more transceivers (206) within a specific duration or after a specific duration.

Furthermore, one or more memories (204) of the second device (200) may store instructions for performing the method described in the example of FIG. 18 when executed by one or more processors (202).

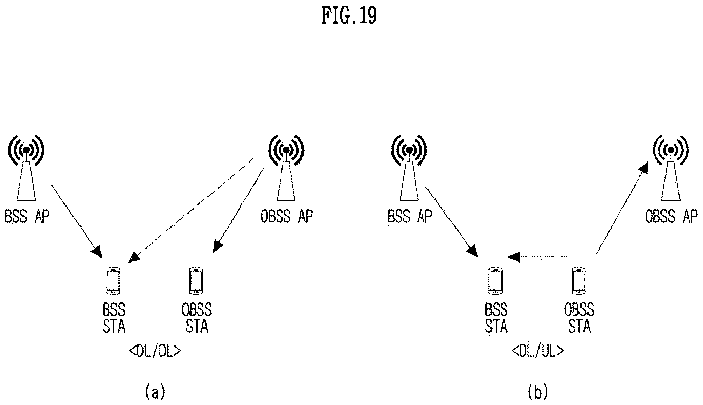

As an example of the present disclosure, it is assumed that a BSS/OBSS AP/STA performs a C-SR-based operation according to "DL/UL" (i.e., an operation according to the method 3 described above) as illustrated in (a) of FIG. 19. Within a duration in which a BSS AP (or, Sharing AP) transmits a DL frame to a BSS STA, the OBSS STA may transmit a UL frame including a UL ACK/BA frame, etc., in response to the DL frame transmitted by the OBSS AP (or, Shared AP).

Here, if the interference level between the BSS STA and the OBSS STA is high, the BSS STA may not be able to smoothly receive the BSS DL frame due to the OBSS UL frame transmission (i.e., due to the interference effect according to the OBSS UL frame transmission).

In order to solve the above-described problem, the following describes a method for transmitting a UL frame of an OBSS STA within a duration in which a BSS AP transmits a DL frame to a BSS STA.

Embodiment 1

Transmission of OBSS UL frames (transmitted from OBSS STA to OBSS AP) may be prohibited within a duration in which DL frames are transmitted from BSS AP to BSS STA.

For example, when an OBSS AP transmits a DL frame that requires an ACK response, it may set the ACK policy for ACK/BA frame transmission to 'delayed ACK'.

Specifically, if it is determined that a UL ACK/BA frame will be transmitted within a duration in which a DL frame is transmitted from a BSS AP to a BSS STA, or/and if the interference level between the BSS STA and the OBSS STA exceeds a threshold, the OBSS AP may indicate/configure the OBSS STA to transmit a UL ACK/BA frame after a duration in which a DL frame is transmitted from the BSS AP to the BSS STA.

Accordingly, if time point after SIFS after receiving a DL frame from an OBSS AP is within the duration in which a DL frame is transmitted from a BSS AP to a BSS STA, the OBSS STA may not transmit a UL frame (e.g., UL ACK/BA frame) for the DL frame within the duration according to the 'delayed ACK' set by the OBSS AP. The OBSS STA may transmit a UL frame for the DL frame after the duration.

Additionally or alternatively, the end time of each of the OBSS DL frame/packet and the BSS DL frame/packet may be aligned. That is, the end time of the OBSS DL frame/packet transmitted by the OBSS AP may be set/defined to coincide with the end time of the BSS DL frame/packet transmitted by the BSS AP.

For example, if one of the OBSS DL frame/packet or the BSS DL frame has a shorter packet length than the other, padding bits and/or dummy signals may be added to the DL frame with the shorter packet length.

The operation/parameter according to Embodiment 1 may be applied to C-SR based operation as well as C-SR based operation.

Embodiment 2

Only STA(s) capable of performing SR-based operations (SR capable) may be configured/ defined/ indicated to transmit OBSS UL frames.

Specifically, the OBSS AP may check the SR capability of one or more OBSS STAs. For example, the OBSS AP may check the SR capability of one or more OBSS STAs by receiving a frame including a field (e.g., an SR capability-related field) indicating whether the OBSS STAs may perform an SR-based operation, respectively.

An OBSS AP may allow transmission of OBSS UL frames only to OBSS STA(s) with SR capability.

For example, an OBSS AP may transmit a field (e.g., an 'immediate ACK' field, etc.) indicating that it allows immediate transmission of an OBSS UL frame for reception of an OBSS DL frame to OBSS STA(s) with SR capability. Accordingly, the OBSS STA(s) with SR capability may transmit an OBSS UL frame for the OBSS DL frame (received from the OBSS AP).

That is, OBSS STA(s) having SR capability may transmit OBSS UL frames to OBSS AP even within a duration in which DL frames are transmitted from BSS AP to BSS STA. For example, OBSS STA(s) having SR capability may determine and allow interference information of BSS DL frames to calculate allowable Tx power. Then, the OBSS STA(s) may transmit OBSS UL frames with the calculated Tx power.

In addition, OBSS STA(s) that do not have SR capability may not be permitted to transmit OBSS UL frames to the OBSS AP within the duration in which DL frames are transmitted from the BSS AP to the BSS STA.

The operation/parameter according to Embodiment 1 may be applied not only to C-SR based operation but also to C-SR based operation.

Embodiment 3

When C-SR based operation is performed, RUs for UL transmission may be allocated to each AP considering UL frame (e.g., UL ACK frame) transmission. That is, BSS/OBSS AP/STA may transmit and receive UL frames by combining C-SR based operation and C-OFDMA based operation.

Specifically, a dedicated channel may be allocated separately for UL (control) frames (e.g., UL ACK frames, etc.). For example, a BSS AP may transmit a DL frame to a BSS STA through a channel other than the dedicated channel. In this case, the OBSS AP may transmit the DL frame to the OBSS STA based on C-SR. The OBSS STA may transmit a UL frame for the DL frame to the OBSS AP through the dedicated channel.

It may be fixed/defined as at least one of the embodiments 1, 2, and 3 described above, but is not limited thereto. The BSS/OBSS AP may select at least one of the embodiments 1, 2, and 3, and notify the BSS/OBSS STA(s) to perform an operation according to the selected embodiment.

That is, the BSS/OBSS AP can apply/instruct/set operations/parameters based on at least one of Embodiments 1, 2, and 3 to the BSS/OBSS STA(s).

For example, a BSS AP **(e.g.,** Sharing AP) may select at least one of Embodiments 1, 2, and 3, and transmit information related to the selected embodiment to the OBSS AP or/and BSS/AP STA (s) via a trigger frame for C-SR **(i.e.,** a C-SR trigger frame). The OBSS AP or/and BSS/AP STA(s) may perform an operation according to the information related to the selected embodiment included in the C-SR trigger frame.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

[Industrial Applicability]

A method proposed by the present disclosure is mainly described based on an example applied to an IEEE 802.11-based system, 5G system, but may be applied to various WLAN or wireless communication systems other than the IEEE 802.11-based system.

**Claims**

1. A method performed by a first station (STA) in a wireless LAN system, the method comprising:

   receiving a first downlink (DL) frame from a first access point (AP); and
   transmitting a first uplink (UL) frame for the first DL frame to the first AP within a specific duration or after the specific duration,
   wherein the specific duration includes a duration in which a second DL frame is transmitted from a second AP to a second STA, and
   wherein the first AP is an OBSS (overlapping basic service set) AP, and the second AP is a BSS AP.

2. The method of claim 1, wherein:
   based on the first STA being an STA capable of performing a SR (spatial reuse) operation, transmission of the first UL frame of the first STA is permitted within the specific duration.

3. The method of claim 2, wherein:
   information indicating permission for transmission of the first UL frame is received from the first AP after SIFS after the first DL frame is transmitted.

4. The method of claim 2, wherein:

   transmission power of the first UL frame is obtained based on an interference level of the second DL frame transmitted from the second AP to the second STA, and
   the first UL frame is transmitted to the first AP using the obtained transmission power.

5. The method of claim 1, wherein:
   based on the first STA being an STA that cannot perform SR (spatial reuse) operation, the first UL frame transmission of the first STA is permitted after the specific duration.

6. The method of claim 5, wherein:
   information indicating a delay in the transmission of the first UL frame is transmitted from the first AP to the first AP.

7. The method of claim 1, wherein:
   an end time of the first DL frame and an end time of the second DL frame are aligned.

8. The method of claim 1, wherein:

   a dedicated channel is allocated for transmitting the first UL frame, and
   the first UL frame is transmitted from the first STA to the first AP through the dedicated channel within the specific duration.

9. The method of claim 8, wherein:
   the second DL frame is transmitted from the second AP to the second STA on any channel other than the dedicated channel.

10. The method of claim 1, wherein:
    information configuring a method by which the first UL frame is transmitted within or after the specific duration is received from the first AP or the second AP via a C(coordinated)-SR trigger frame.

11. The method of claim 1, wherein:
    the first STA is an OBSS STA, and the second STA is a BSS STA.

12. A first station (STA) in a wireless LAN system, the first STA comprising:

    at least one transceiver; and
    at least one processor connected to the at least one transceiver,
    wherein the at least one processor is configured to:

       receive a first downlink (DL) frame from a first access point (AP) through the at least one transceiver; and
       transmit a first uplink (UL) frame for the first DL frame to the first AP within a specific duration or after the specific duration through the at least one transceiver,
       wherein the specific section includes a duration in which a second DL frame is transmitted from a second AP to a second STA, and
       wherein the first AP is an OBSS (overlapping basic service set) AP, and the second AP is a BSS AP.

13. A method performed by a first access point (AP) in a wireless LAN system, the method comprising:

    transmitting a first downlink (DL) frame to a first station (STA); and
    receiving a first uplink (UL) frame for the first DL frame from the first STA within a specific duration or after the specific duration,
    wherein the specific duration includes a duration in which a second DL frame is transmitted from a second AP to a second STA, and
    wherein the first AP is an OBSS (overlapping basic service set) AP, and the second AP is a BSS AP.

14. A first access point (AP) in a wireless LAN system, the first AP comprising:

    at least one transceiver; and

at least one processor connected to the at least one transceiver,
wherein the at least one processor is configured to:

transmit a first downlink (DL) frame to a first station (STA) through the at least one transceiver; and
receive a first uplink (UL) frame for the first DL frame from the first STA within a specific duration or after the specific duration through the at least one transceiver,
wherein the specific duration includes a duration in which a second DL frame is transmitted from a second AP to a second STA, and
wherein the first AP is an OBSS (overlapping basic service set) AP, and the second AP is a BSS AP.

15. A processing apparatus configured to control a first station (STA) in a wireless LAN system, the processing apparatus comprising:

at least one processor; and
at least one computer memory operably connected to the at least one processor and storing instructions that, based on being executed by the at least one processor, perform operations comprising:

receiving a first downlink (DL) frame from a first access point (AP); and
transmitting a first uplink (UL) frame for the first DL frame to the first AP within a specific duration or after the specific duration,
wherein the specific duration includes a duration in which a second DL frame is transmitted from a second AP to a second STA, and
wherein the first AP is an OBSS (overlapping basic service set) AP, and the second AP is a BSS AP.

16. At least one non-transitory computer-readable medium storing at least one instruction,
wherein the at least one instruction executable by at least one processor controls a device in a wireless LAN system to:

receive a first downlink (DL) frame from a first access point (AP); and
transmit a first uplink (UL) frame for the first DL frame to the first AP within a specific duration or after the specific duration,
wherein the specific duration includes a duration in which a second DL frame is transmitted from a second AP to a second STA, and
wherein the first AP is an OBSS (overlapping basic service set) AP, and the second AP is a BSS AP.

FIG.1

EP 4 535 918 A1

# FIG.2

BSS 1                    802.11 Components

STA 1

STA 2

AP                                    ESS

DSM

DS

AP

STA 3

STA 4

BSS 2

# FIG.3

| STA | | AP |

S310 — Probe Request → / Probe Response ←                Discovery

S320 — Authentication Request → / Authentication Response ←     Authentication

S330 — Association Request → / Association Response ←           Association

S340 — RSNA Request → / RSNA Response ←                 Security setup

# FIG.4

| | |
|---|---|
| busy — Occupied Medium | bo_e — Elapsed Backoff time |
| ⬇ Packet arrived at MAC | bo_r — Residual Backoff time |

# FIG.5

FIG.6

| STF | LTF | SIG | ··· | DATA |

| SERVICE | PSDU | PPDU TAIL | PAD |

OCTETS:2   2      6        6       6        2         6        2        4     0-7951   4

| FRAME CONTROL | DURATION /ID | ADDRESS 1 | ADDRESS 2 | ADDRESS 3 | SEQUENCE CONTROL | ADDRESS 4 | QoS CONTROL | HT CONTROL | FRAME BODY | FCS |

◄──────────────────────── MAC HEADER ────────────────────────►

# FIG.7

PPDU Format(IEEE 802.11a/g)

L-STF | L-LTF | L-SIG | Data
(8 μs) (8 μs) (4 μs)

HT PPDU Format(IEEE 802.11n)

L-STF | L-LTF | L-SIG | HT-SIG | HT-STF | HT-LTF | ... | HT-LTF | HT-LTF | ... | HT-LTF | Data
(8 μs) (8 μs) (4 μs) (8 μs) (4 μs) — Data HT-LTFs 4 μs per LTF — Extension HT-LTFs 4 μs per LTF

VHT PPDU Format(IEEE 802.11ac)

L-STF | L-LTF | L-SIG | VHT-SIG-A | VHT-STF | VHT-LTF | VHT-SIG-B | Data
(8 μs) (8 μs) (4 μs) (8 μs) (4 μs) (4 μs per VHT-LTF symbol) (4 μs)

HE PPDU Format(IEEE 802.11ax)

L-STF | L-LTF | L-SIG | RL-SIG | HE-SIG-A | HE-SIG-B | HE-STF | HE-LTF | ... | HE-LTF | Data | PE
(8 μs) (8 μs) (4 μs) (4 μs) (8 μs) (4 μs per symbol) (4 μs) — Variable durations per HE-LTF symbol

EP 4 535 918 A1

# FIG.8

6 Guard          Null                                    5 Guard
              Subcarriers

                    Middle 26-
                    tone RU

| 26 | 26 | 26 | 26 | 13 | 13 | 26 | 26 | 26 | 26 |

| 52 | 52 | 13 | 13 | 52 | 52 |

| 106 | 13 | 13 | 106 |

7DC

| 242 |

3DC

FIG.9

EP 4 535 918 A1

# FIG.10

FIG.11

HE-SIG-B content channel

Common field
(if present)

User Specific field

Common Bits + CRC + Tail | 2 User fields + CRC + Tail | 2 User fields + CRC + Tail | ... | 1 or 2 User fields + CRC + Tail | Padding

1st User Block field

2nd User Block field

final User Block field

EP 4 535 918 A1

## FIG.12

RU Allocation subfield
$0100y_2\,y_1\,y_0 = 01000010$

| User field 1 | User field 2 | User field 3 | User field 4 | User field 5 | User field 6 | User field 7 | User field 8 |
|---|---|---|---|---|---|---|---|

←—— MU-MIMO allocation ——→

| RU assignment | 106-tone | 26-tone | 26-tone | 26-tone | 26-tone | 26-tone |
|---|---|---|---|---|---|---|
| Number of users per RU | 3 | 1 | 1 | 1 | 1 | 1 |

FIG.13

EHT-LTF symbol duration depends
on the GI + LTF size

| 8µs | 8µs | 4µs | 4µs | 8µs:4µs per symbol | 4µs per symbol | 4µs | | | | |
|---|---|---|---|---|---|---|---|---|---|---|
| L-STF | L-LTF | L-SIG | RL-SIG | U-SIG | EHT-SIG | EHT-STF | EHT-LTF | ··· | EHT-LTF | Data | PE |

EHT MU PPDU format(IEEE 802.11be)

EHT-LTF symbol duration depends
on the GI + LTF size

| 8µs | 8µs | 4µs | 4µs | 8µs:4µs per symbol | 8µs | | | | |
|---|---|---|---|---|---|---|---|---|---|
| L-STF | L-LTF | L-SIG | RL-SIG | U-SIG | EHT-STF | EHT-LTF | ··· | EHT-LTF | Data | PE |

EHT TB PPDU format(IEEE 802.11be)

# FIG.14

**EHT variant common info field format**

| | B0 B3 | B4 B15 | B16 | B17 | B18 B19 | B20 B21 | B22 | B23 B25 | B26 | B27 | B28 B33 | B34 B35 | B36 |
|---|---|---|---|---|---|---|---|---|---|---|---|---|---|
| | Trigger Type | UL Length | More TF | CS Required | UL BW | GI And HE/EHT-LTF Type/Triggered TXOP Sharing Mode | Reserved | Number Of HE/EHT-LTF Symbols | Reserved | LDPC Extra Symbols Segment | AP Tx Power | Pre-FEC Padding Factor | PE Disambiguity |
| Bits: | 4 | 12 | 1 | 1 | 2 | 2 | 1 | 3 | 1 | 1 | 6 | 2 | 1 |

| | B37 B52 | B53 | B54 | B55 | B56 B62 | B63 | |
|---|---|---|---|---|---|---|---|
| | UL Spatial Reuse | Reserved | HE/EHT P160 | Special User Info Field Flag | EHT Reserved | Reserved | Trigger Dependent Common Info |
| Bits: | 16 | 1 | 1 | 1 | 7 | 1 | variable |

**Special user info field format**

| | B0 B11 | B12 B14 | B15 B16 | B17 B20 | B21 B24 | B25 B36 | B37 B39 | |
|---|---|---|---|---|---|---|---|---|
| | AID12 | PHY Version Identifier | UL Bandwidth Extension | EHT Spatial Reuse 1 | EHT Spatial Reuse 2 | U-SIG Disregard And Validate | Reserved | Trigger Dependent User Info |
| Bits: | 12 | 3 | 2 | 4 | 4 | 12 | 3 | variable |

**Trigger frame format**

| | ← MAC header → | | | | | | | |
|---|---|---|---|---|---|---|---|---|
| | Frame Control | Duration | RA | TA | Common Info | User Info List | Padding | FCS |
| Octets: | 2 | 2 | 6 | 6 | 8 or more | variable | variable | 4 |

**EHT variant user info field format**

| | B0 B11 | B12 B19 | B20 | B21 B24 | B25 | B26 B31 | B32 B38 | B39 | |
|---|---|---|---|---|---|---|---|---|---|
| | AID12 | RU Allocation | UL FEC Coding Type | UL EHT-MCS | Reserved | SS Allocation RA-RU Information | UL Target Receive Power | PS160 | Trigger Dependent User Info |
| Bits: | 12 | 8 | 1 | 4 | 1 | 6 | 7 | 1 | variable |

EP 4 535 918 A1

# FIG.15

STX

(a)

C-OFDMA

(b)

CBF

(c)

AP selection

(d)

JTX

(e)

Backhaul

First bandwidth

Second bandwidth

# FIG.16

(a) < DL/DL >

(b) < UL/DL >

(c) < DL/UL >

(d) < UL/UL >

EP 4 535 918 A1

## FIG.17

```
RECEIVING A FIRST DL FRAME FROM THE
FIRST ACCESS POINT                          ∿S1710

                    ↓

TRANSMITTING AN UL FRAME FOR THE
FIRST DL FRAME TO THE FIRST AP WITHIN
A SPECIFIC DURATION OR AFTER A              ∿S1720
SPECIFIC DURATION
```

## FIG.18

```
TRANSMITTING A FIRST DL FRAME TO THE
STA                                         ∿S1810

                    ↓

RECEIVING AN UL FRAME FOR THE FIRST
DL FRAME FROM THE FIRST STA WITHIN A
SPECIFIC DURATION OR AFTER A SPECIFIC       ∿S1820
DURATION
```

FIG.19

## INTERNATIONAL SEARCH REPORT

| International application No. |
|---|
| **PCT/KR2023/007237** |

**A. CLASSIFICATION OF SUBJECT MATTER**

**H04W 76/15**(2018.01)i; **H04W 24/10**(2009.01)i; **H04W 84/12**(2009.01)i; **H04B 7/024**(2017.01)i; **H04L 1/18**(2006.01)i; **H04W 52/24**(2009.01)i

According to International Patent Classification (IPC) or to both national classification and IPC

**B. FIELDS SEARCHED**

Minimum documentation searched (classification system followed by classification symbols)

H04W 76/15(2018.01); H04W 56/00(2009.01); H04W 72/04(2009.01); H04W 72/08(2009.01); H04W 72/12(2009.01); H04W 74/06(2009.01); H04W 74/08(2009.01); H04W 92/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: OBSS(overlapping basic service set) AP(access point), BSS(basic service set) AP, 제1-제2 STA(first and second stations), SR(spatial reuse), 간섭(interference), 전용 채널(dedicated channel)

**C. DOCUMENTS CONSIDERED TO BE RELEVANT**

| Category* | Citation of document, with indication, where appropriate, of the relevant passages | Relevant to claim No. |
|---|---|---|
| Y | US 2021-0289554 A1 (INTERDIGITAL PATENT HOLDINGS, INC.) 16 September 2021 (2021-09-16)<br>See paragraphs [0010]-[0182]; and figure 5. | 1-16 |
| Y | JP 2021-036712 A (INTERDIGITAL PATENT HOLDINGS INC.) 04 March 2021 (2021-03-04)<br>See paragraphs [0061]-[0088]. | 1-16 |
| Y | US 2021-0307067 A1 (LG ELECTRONICS INC.) 30 September 2021 (2021-09-30)<br>See paragraphs [0016]-[0261]; and figure 10. | 2-6 |
| Y | US 2016-0165630 A1 (INTERDIGITAL PATENT HOLDINGS, INC.) 09 June 2016 (2016-06-09)<br>See paragraph [0102]; and figures 9 and 12. | 7 |
| A | US 2016-0157195 A1 (MEDIATEK INC.) 02 June 2016 (2016-06-02)<br>See paragraphs [0023]-[0037]; and figure 1. | 1-16 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 August 2023** | **28 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| | | | | | |
|---|---|---|---|---|---|
| International application No. | | | | | |
| **PCT/KR2023/007237** | | | | | |

| Patent document cited in search report | | | Publication date (day/month/year) | Patent family member(s) | | | Publication date (day/month/year) |
|---|---|---|---|---|---|---|---|
| US | 2021-0289554 | A1 | 16 September 2021 | CN | 108476530 | A | 31 August 2018 |
| | | | | CN | 108476530 | B | 21 January 2022 |
| | | | | CN | 114466465 | A | 10 May 2022 |
| | | | | EP | 3400749 | A1 | 14 November 2018 |
| | | | | TW | 201737652 | A | 16 October 2017 |
| | | | | TW | I734725 | B | 01 August 2021 |
| | | | | US | 10973051 | B2 | 06 April 2021 |
| | | | | US | 2019-0007973 | A1 | 03 January 2019 |
| | | | | WO | 2017-120418 | A1 | 13 July 2017 |
| JP | 2021-036712 | A | 04 March 2021 | EP | 3020146 | A2 | 18 May 2016 |
| | | | | EP | 3761518 | A1 | 06 January 2021 |
| | | | | EP | 3910810 | A1 | 17 November 2021 |
| | | | | JP | 2016-526856 | A | 05 September 2016 |
| | | | | JP | 2019-017115 | A | 31 January 2019 |
| | | | | JP | 7159263 | B2 | 24 October 2022 |
| | | | | TW | 201509149 | A | 01 March 2015 |
| | | | | TW | I665883 | B | 11 July 2019 |
| | | | | US | 10880894 | B2 | 29 December 2020 |
| | | | | US | 11678318 | B2 | 13 June 2023 |
| | | | | US | 2016-0174206 | A1 | 16 June 2016 |
| | | | | US | 2018-0167926 | A1 | 14 June 2018 |
| | | | | US | 2021-0120539 | A1 | 22 April 2021 |
| | | | | US | 2022-0240239 | A1 | 28 July 2022 |
| | | | | WO | 2015-006537 | A2 | 15 January 2015 |
| | | | | WO | 2015-006537 | A3 | 19 March 2015 |
| US | 2021-0307067 | A1 | 30 September 2021 | EP | 3125635 | A1 | 01 February 2017 |
| | | | | EP | 3125635 | B1 | 14 December 2022 |
| | | | | US | 10560962 | B2 | 11 February 2020 |
| | | | | US | 11064523 | B2 | 13 July 2021 |
| | | | | US | 11690099 | B2 | 27 June 2023 |
| | | | | US | 2018-0220456 | A1 | 02 August 2018 |
| | | | | US | 2020-0154476 | A1 | 14 May 2020 |
| | | | | WO | 2017-018801 | A1 | 02 February 2017 |
| US | 2016-0165630 | A1 | 09 June 2016 | CN | 105379397 | A | 02 March 2016 |
| | | | | EP | 3020243 | A1 | 18 May 2016 |
| | | | | TW | 201513595 | A | 01 April 2015 |
| | | | | WO | 2015-006637 | A1 | 15 January 2015 |
| US | 2016-0157195 | A1 | 02 June 2016 | EP | 3026974 | A1 | 01 June 2016 |
| | | | | EP | 3026974 | B1 | 16 May 2018 |
| | | | | US | 10051588 | B2 | 14 August 2018 |

Form PCT/ISA/210 (patent family annex) (July 2022)